# EUROPÄISCHE PATENTSCHRIFT

(11) **EP 3 983 713 B1**
(45) Veröffentlichungstag und Bekanntmachung des Hinweises auf die Patenterteilung: **26.02.2025**
(21) Anmeldenummer: 20754170.7
(22) Anmeldetag: 12.06.2020
(51) Int. Cl.: B29C 65/08, B29C 65/16, B29C 65/76, B29C 65/78, F16L 47/03, F16L 21/08, B29C 65/00

(54) **SYSTEM ZUM HERSTELLEN EINER VERBINDUNG ZWISCHEN EINEM ERSTEN ROHRELEMENT UND EINEM ZWEITEN ROHRELEMENT UND VERFAHREN ZUR HERSTELLUNG EINER VERBINDUNG**
SYSTEM TO CONNECT TWO PIPE ELEMENTS AND METHOD FOR PRODUCING A COUPLING
SYSTÈME POUR RACCORDER DEUX ÉLÉMENTS TUBULAIRES ET PROCÉDÉ DE FABRICATION D'UN RACCORDEMENT

(30) Priorität: 14.06.2019 DE 102019116326
(43) Veröffentlichungstag der Anmeldung: 20.04.2022
(73) Patentinhaber: Swiss Tech Innovation AG, 4600 Olten (CH)
(72) Erfinder: WÜST, Theodor, 8630 Rüti (CH)
(74) Vertreter: Hehn, Christian Michael
(86) Internationale Anmeldenummer: PCT/EP2020/025281
(87) Internationale Veröffentlichungsnummer: WO 2020/249265

(56) Entgegenhaltungen:
- EP-A1- 3 409 954
- WO-A1-2012/093959
- WO-A2-2011/150341
- US-A1- 2010 019 471

## Beschreibung

### 1. Technisches Gebiet

Die Erfindung betrifft einen Rohrverbindungs-Applikator mit einem Kontrollgerät und ein Verfahren zum Herstellen einer Verbindung zwischen einem ersten Rohrelement und einem zweiten Rohrelement. Rohrverbindungen werden zur Verbindung einzelner Rohrelemente zu einem zusammenhängenden längeren und ggf. gebogenen Rohr benötigt, in welchem nach Fertigstellung ein fluides Medium unter definiertem Druck gehalten oder transportiert wird.

### 2. Stand der Technik

Rohrverbindungen werden unter Verwendung von Muffen und verschiedener Verbindungstechniken hergestellt. Bekannte Verbindungstechniken sind beispielsweise:
- Verschrauben und Abdichten mit Hanf oder einem Teflonband oder durch Schraub-/Klemmverbindungen, beispielsweise nach dem System "WIROFLEX",
- Verschweißen, beispielsweise autogen, elektrisch, lasertechnisch oder per Ultraschall,
- Verlöten, beispielsweise durch Hartlöten oder Weichlöten,
- Klemmen, beispielsweise wie im europäischen Patent EP 3 120 064 B1 beschrieben,
- Verpressen,
- Schrumpfen mittels Wärme und/oder Kälte,
- Verreiben,
- Verkleben mittels Ein- oder Mehrkomponentenkleber.

Bei den bekannten Verbindungstechniken sind abhängig vom Material und den Dimensionen der zu verbindenden Rohrenden und von den Einsatzbedingungen der fertiggestellten Rohrverbindung sehr unterschiedliche Prozessparameter erforderlich. Da die Verbindungen in der Praxis häufig vor Ort manuell durch einen Monteur erstellt werden, hängt die Qualität der Verbindung sehr stark vom Geschick und der Erfahrung des Monteurs ab. Häufig beeinflussen subjektive Eigenschaften, wie beispielsweise die Tagesform und/oder Umwelteinflüsse die Qualität der Verbindung, wodurch eine gleichbleibende Qualität nicht sichergestellt werden kann.

Aus dem Stand der Technik ist die WO 2012 093 959 A2 bekannt, die ein Verfahren zum Schweißen von Rohren aus einem schweißbaren Polymermaterial betrifft, wobei das Rohr Enden aufweist, und eine Muffe aus einem schweißbaren Polymermaterial. Das Verfahren umfasst, dass die Muffe mit Überlappung über die Enden der Rohre gelegt wird, dass die Muffe mit den Enden der Rohre durch Auflegen eines elektrisch leitenden Bandes verschweißt wird, das zwischen dem Rohr und der Muffe für geschmolzenen Kunststoff durchlässig ist, und dass eine Stromversorgung über Zuleitungskabel mit dem Band verbunden ist und dass ein elektrischer Strom zugeführt wird, um das Band und das umgebende Polymermaterial so zu erhitzen, dass sie um das Band herum zusammenschmelzen, um eine Schweißnaht zu bilden.

Aus der US 2010 019 471 A1 ist eine Kupplungsanordnung zur automatischen Herstellung von Kupplungs- und Schnellkupplungsverbindungen zwischen einem Kesselwagen, der einen Tank mit wasserfreiem Ammoniak trägt, bekannt.

Die WO 2011 150 341 A2 beschreibt ein Pipelineeinführsystem, das eine Einführvorrichtung außerhalb eines Tunnels umfassen kann, der einen Einführvorrichtungsrahmen und eine bewegbare Klemmvorrichtung in verschiebbarem Eingriff mit dem Einführvorrichtungsrahmen enthält. Ein Antrieb kann bewirken, dass sich die bewegliche Klemmvorrichtung, die mit einer Rohrleitung in Eingriff steht, zwischen einer ersten Position und einer zweiten Position entlang des Rahmens bewegt. Eine Steuerung dient dazu, den Antrieb und die bewegliche Klemmvorrichtung zu steuern, die auf Wandler anspricht, die den Rohrleitungsschlupf, die Schubkraft und den Klemmdruck messen.

Weiterhin ist aus der EP 3 409 954 A1 ein System mit pneumatischer Triplex-Architektur bekannt, das ein erstes, zweites und drittes pneumatisches Teilsystem aufweist, wobei eine Triplex-Redundanz erreicht werden kann, indem nur ein bestimmter Knoten in jedem System gemessen wird.

### 3. Aufgabenstellung

Es ist deshalb Aufgabe der Erfindung die Nachteile des Stands der Technik zu überwinden und eine einfach bedienbare, rasche, sichere und nachvollziehbar dokumentierbare Montage und ggf. Demontage von Rohrverbindungen zu ermöglichen.

### 4. Zusammenfassung der Erfindung

Die Aufgabe wird durch ein erfindungsgemäßes System zum Herstellen einer Verbindung zwischen einem ersten Rohrelement und einem zweiten Rohrelement gemäß den Merkmalen des unabhängigen Anspruchs 1 und durch ein Verfahren zum Herstellen einer Verbindung zwischen einem ersten Rohrelement und einem zweiten Rohrelement gemäß den Merkmalen des unabhängigen Anspruchs 14 gelöst. Weitere vorteilhafte Ausgestaltungen der Lösung finden sich in den abhängigen Ansprüchen.

Die Erfindung umfasst ein System zum Herstellen einer Verbindung zwischen einem ersten Rohrelement und einem zweiten Rohrelement umfassend eine Muffe, wobei die Muffe eine Steckmuffe mit einem Klemmelement umfasst, welches ein in Längsrichtung der Steckmuffe ein auf Schub koppelbares Spannelement aufweist, wobei das Klemmelement so geformt und ausgebildet ist, dass es bei Beaufschlagung einer axialen Kraft mittels einem fluiden Druckmedium seine Klemmwirkung in Form einer Schnappfunktion auf das erste Rohrelement und das zweite Rohrelement ausübt, weiter umfassend ein Prozesssteuerungsmittel in Form eines über einen Soll-Prozessparameter steuerbaren Druckluftventils, über welches ein Prozessparameter in Form eines gesteuerten Druckluftverlaufs an die steuerbaren Mittel zur Herstellung einer dauerhaften und/oder lösbaren Rohrverbindung der Steckmuffe anlegbar ist, wodurch eine Klemmwirkung in Form einer Schnappfunktion auf das erste Rohrelement und das zweite Rohrelement ausübbar ist, und umfassend Mittel zur Istwerterfassung wenigstens eines der Ist-Prozessparameter in Form eines Druckluftverlaufs an den steuerbaren Mitteln zur Herstellung einer dauerhaften und/oder lösbaren Rohrverbindung, welches die Ist-Prozessparameter als elektrische Ist-Prozessparameter an eine Steuereinheit eines Rohrverbindungs-Applikators mit einem Kontrollgerät abgibt, welche aus den elektrischen Ist-Prozessparametern die Soll-Prozessparameter zur Steuerung des Prozesssteuerungsmittels.

Der Rohrverbindungs-Applikator mit dem Kontrollgerät kann Soll-Prozessparameter zur Steuerung von Prozesssteuerungsmitteln zur Herstellung einer Rohrverbindung bereitstellen. Der Rohrverbindungs-Applikator mit einem Kontrollgerät erfasst dabei über Mittel zur Istwerterfassung, die Ist-Prozessparameter.

Eine Muffe ist entweder ein Bauteil, welches ein Ende eines ersten Rohrelements und ein Ende eines zweiten Rohrelements in sich aufnimmt oder eine definierte Erweiterung des Innendurchmessers am Ende eines zweiten Rohrelements, in welches ein Ende eines ersten Rohrelements einfügbar ist und so jeweils das erste Rohrelement mit dem zweiten Rohrelement zunächst noch nicht dauerhaft miteinander verbindet.

Eine dauerhafte Rohrverbindung kann nach Herstellung einer zunächst noch nicht dauerhaften Rohrverbindung über Mittel zur Herstellung einer dauerhaften Rohrverbindung hergestellt werden. Optional kann die Rohrverbindung wieder lösbar ausgebildet sein.

Die Mittel zur Herstellung einer dauerhaften Rohrverbindung und/oder lösbaren Rohrverbindung zweier Rohrenden können dabei durch ein Prozesssteuerungsmittel angesteuert werden. Das Prozesssteuerungsmittel kann beispielsweise kraft- oder drehmomentgesteuerte Mittel zum Schließen oder Öffnen von Schraubverbindungen, kraft- oder drehmomentgesteuerte Mittel zum Schließen oder Öffnen von Klemmmuffen, steuerbare Schweißgeräte oder steuerbare Lötgeräte, mechanisch, hydraulisch, pneumatisch oder elektrisch steuerbare Schrumpf- oder Pressvorrichtungen, insbesondere auch solche, zur Betätigung von nach dem europäischen Patent EP 3 120 064 B1 arbeitenden Steckmuffen oder Kleberdosier- und Haltevorrichtungen zum Verbinden zweier Rohrenden umfassen.

Der Rohrverbindungs-Applikator mit einem Kontrollgerät kann optional jeweils einerseits die physikalischen Ist-Prozessparameter der Komponenten einer Rohrverbindung bestimmen, beispielsweise den Typ und/oder das Material sowie die Abmessungen der Muffe und/oder des ersten Rohrelements und/oder des zweiten Rohrelements, die Temperatur, und/oder den Luftdruck und/oder die Luftfeuchtigkeit an der Muffe und/oder am ersten Rohrelement und/oder gegebenenfalls am zweiten Rohrelement und/oder der Position des ersten Rohrelementes und gegebenenfalls des zweiten Rohrelementes bezüglich der Position der Muffe, daraus andererseits den Soll-Prozessparameter wenigstens eines von einem Prozesssteuerungsmittel an die zu erstellende Rohrverbindung abzugebenden Prozessparameters und den Verlauf der abzugebenden Prozessparameter ermitteln, das heißt, den definierten zeitlichen Verlauf in Vorzeichen und Betrag und gegebenenfalls der chemischen Zusammensetzung und/oder physikalischen Zusammensetzung wenigstens eines der von dem Prozesssteuerungsmittel abgegebenen Prozessparameter zur Herstellung einer dauerhaften Rohrverbindung und/oder lösbaren Rohrverbindung eines ersten Rohrelements mit einem zweiten Rohrelement. Alternativ oder zusätzlich kann der Soll-Prozessparameter wenigstens eines von einem Prozesssteuerungsmittel an die zu erstellende Rohrverbindung abzugebenden Prozessparameters manuell durch einen Benutzer direkt oder über den Rohrverbindungs-Applikator mit einem Kontrollgerät an das Prozesssteuerungsmittel vorgegeben werden.

Der Rohrverbindungs-Applikator mit einem Kontrollgerät kann optional
- persönliche Daten / Kennung des Benutzers, der die Rohrverbindung herstellt,
- Datum, Uhrzeit und geographische Position der hergestellten Rohrverbindung
umfassen und kann über Mittel zur Istwerterfassung kontinuierlich oder in definierten Zeitabständen den dabei erzielten tatsächlichen Verlauf (Istwert) wenigstens eines der an die Rohrverbindung abzugebenden Prozessparameters überwachen.

Soll-Prozessparameter umfassen beispielsweise elektrische, mechanische, hydraulische und/oder pneumatische Signale zum Betrieb eines Prozesssteuerungsmittels zur Steuerung der steuerbaren Mittel zur Herstellung einer dauerhaften und/oder lösbaren Rohrverbindung, insbesondere eines an die Mittel zum Schließen oder Öffnen von Klemmmuffen angelegten resultierenden Drucks oder zeitlichen Druckverlaufs.

Die Soll-Prozessparameter können entweder vom Rohrverbindungs-Applikator mit einem Kontrollgerät direkt an das Prozesssteuerungsmittel abgegeben oder die Soll-Prozessparameter können manuell durch einen Benutzer über eine optionale manuelle Schnittstelle unter Vorgabe der vom Rohrverbindungs-Applikator mit einem Kontrollgerät ermittelten Soll-Prozessparameter an das Prozesssteuerungsmittel abgegeben werden. Die Vorgabe der vom Rohrverbindungs-Applikator mit einem Kontrollgerät ermittelten Soll-Prozessparameter erfolgt vorteilhafter Weise über eine Schnittstelle zur Eingabe vom Benutzer und/oder zur Ausgabe an den Benutzer oder über eine Schnittstelle zu einem Computer und über ein Ausgabegerät des Computers, beispielsweise ein Display und/oder einen Lautsprecher oder einen Kopfhörer eines Kommunikationsmittels wie ein Smartphone.

Prozesssteuerungsmittel sind beispielsweise ein Schraubaktuator, beispielsweise ein Akkuschrauber oder ein anderweitig elektrisch oder pneumatisch oder hydraulisch betriebenes Schraubwerkzeug mit definiert steuerbarem Drehmoment und definiertem Drehmomentverlauf, ein Druckluftgenerator mit definiert steuerbarem Arbeitsdruck und definiertem Arbeitsdruckverlauf innerhalb eines fluiden Druckmediums, beispielsweise eine an einem Druckbehälter mit einem unter definiertem Druck stehenden fluiden Druckmedium angeschlossene mechanisch betätigbare Dosierpistole oder ein elektrisch oder pneumatisch oder hydraulisch betätigbares Druckluftventil oder ein Handkompressor oder eine Einweg- oder Mehrwegkartusche oder eine Druckpatrone, ein hydraulischer Druckgenerator mit definiert steuerbarem Arbeitsdruck und definiertem Arbeitsdruckverlauf innerhalb eines fluiden Druckmediums, ein Aktuator umfassend ein mechanisch, elektrisch, pneumatisch oder hydraulisch steuerbares Ventil zur Steuerung des Durchflusses und/oder des Drucks eines fluiden Druckmediums, insbesondere ein Generator und/oder ein Aktuator zur Erzeugung eines Drucks und eines definierten Druckverlaufs, beispielsweise einen Impuls oder einen anderen zeitlichen Verlauf innerhalb eines fluiden Druckmediums zur Steuerung einer Steckmuffe nach dem europäischen Patent EP 3 120 064 B1, eine Klebedosiervorrichtung mit steuerbarer Konzentration und Menge eines Ein- oder Mehrkomponentenklebers, eine steuerbare Vorschubeinrichtung mit definierter Steuerung der Position einer Rohrkomponente bezüglich der Position im Rohrverbindungsbereich, eine Lötvorrichtung mit steuerbarer Temperatur und steuerbarem Temperaturverlauf, eine Schweißvorrichtung mit steuerbarer Temperatur und Temperaturverlauf und optional mit steuerbarer Zufuhr einer Schweißelektrode und optionaler Steuerung einer Schutzgaszufuhr, eine Laserschweißvorrichtung mit steuerbarer Temperatur und Temperaturverlauf oder eine Ultraschallschweißvorrichtung mit steuerbarer Temperatur und Temperaturverlauf, optional mit steuerbarer Arbeitsfrequenz und/oder Arbeitsamplitude.

Die von einem Prozesssteuerungsmittel an die zu erstellende Rohrverbindung abzugebenden Prozessparameter zur Steuerung der steuerbaren Mittel zur Herstellung einer dauerhaften Rohrverbindung und/oder lösbaren Rohrverbindung zweier Rohrenden können optional
- den Vorschub zum Herstellen einer definierten Eindringtiefe eines ersten Rohrelements und/oder eines zweiten Rohrelements in die Muffe oder einer definierten Eindringtiefe des ersten Rohrelements in die durch das zweite Rohrelement bereitgestellte Muffe oder zum Herstellen eines definierten Abstands eines stumpf zu fügenden ersten Rohrelements zu einem zweiten Rohrelement,
- das Drehmoment zwischen der Muffe und einem ersten Rohrelement und/oder zweiten Rohrelement wirkenden Schraubverbindung, beispielsweise erzeugt durch einen elektrisch, pneumatisch oder hydraulisch betriebenen Handschrauber mit einem für die Mittel zur Herstellung der dauerhaften Rohrverbindung passenden Schrauberaufsatz,
- den pneumatischen und/oder hydraulischen Steuerdruck eines Fluids zur Steuerung einer Klemmwirkung der Mittel zur Herstellung der dauerhaften Rohrverbindung, beispielsweise für eine nach dem europäischen Patent EP 3 120 064 B1 arbeitenden Steckmuffe, beispielsweise angelegt über eine mechanisch steuerbare Druckluftpistole oder ein elektrisch, pneumatisch oder hydraulisch steuerbares Druckluftventil zur Steuerung von Druckluft, welche aus einem Druckluftbehälter über einen Druckluftschlauch zugeführt wird,
- die Materialzusammensetzung eines Verbindungsmittels wie beispielsweise der Zusammensetzung einer Schweißelektrode, deren Vorschub und/oder einer Schutzgaszusammensetzung oder eines Lötmittels und/oder eines Flussmittels,
- die zugeführte oder abgeführte Wärme zur Erzeugung einer definierten Temperatur an einem steuerbaren Mittel zur Herstellung von kraft- und/oder formschlüssigen Verbindung und/oder materialschlüssigen Verbindung, beispielsweise einer Schweiß- oder Lötverbindung oder einer Schrumpfverbindung,
- die Mischung und/oder die Dosierung von Kleberkomponenten einer Klebeverbindung,
- Frequenz, Amplitude, Abstand und zeitliches Profil einer Ultraschallschweißvorrichtung für Kunststoff,
- Amplitude, Abstand und zeitliches Profil einer Laserschweißvorrichtung für Kunststoff
umfassen.

Bevorzugter Weise kann der Rohrverbindungs-Applikator mit einem Kontrollgerät optional auf ein für die jeweilige Sollwertkombination abgespeichertes Toleranzband zugreifen, vergleicht den jeweiligen Istwert mit dem Toleranzband des Sollwertes und gibt bei Abweichung eines Istwertes von der Soll-Toleranz einen Alarm an den Benutzer aus und/oder speichert ein Fehlerprotokoll. Die Ausgabe an den Benutzer kann über eine Anzeige am Rohrverbindungs-Applikator mit einem Kontrollgerät, beispielsweise über eine Schnittstelle zur Eingabe vom Benutzer und/oder zur Ausgabe an den Benutzer oder per Smartphone oder über einen nahen oder entfernten Drucker oder durch Übermitteln und Speichern der Daten an einen nahen oder entfernten Computer, beispielsweise per Smartphone erfolgen.

Vorteilhafter Weise umfasst der Rohrverbindungs-Applikator mit einem Kontrollgerät neben der Option einer manuellen Bedienbarkeit eine optionale elektronische Steuereinheit.

Die optionale Steuereinheit kann vorteilhafter Weise einen Computer mit Daten- und Programmspeicher und/oder eine Schnittstelle zu einem Computer, einem Smartphone und/oder einem Server zur Steuerung der Prozessparameter und zur Steuerung der Sollwerte und zur Erfassung des Istwertes wenigstens eines Prozessparameters umfassen.

Die Steuereinheit kann eine Schnittstelle zum und vom Benutzer und/oder eine Schnittstelle zu einem lokalen oder entfernten Computer umfassen, über welche Eingaben an die Steuereinheit zur Steuerung des Rohrverbindungs-Applikators mit einem Kontrollgerät möglich sind und Ausgaben und das Speichern von Ergebniswerten vom Rohrverbindungs-Applikator mit einem Kontrollgerät an den Benutzer und/oder an einen lokalen oder entfernten Computer möglich sind. Ein entfernter Computer kann dabei beispielsweise ein über das Internet erreichbarer Server oder ein über LAN oder WLAN erreichbarer Computer sein.

Die Sollwerte und deren Toleranzen können dabei in der Steuereinheit in einem Datenspeicher oder in einem lokalen oder entfernten Computer, beispielsweise als Lookup-Tabelle oder als Datensatz in einer relationalen Datenbank abgespeichert werden. Der entfernte Computer kann ein über eine drahtgebundene Schnittstelle oder drahtlose Schnittstelle mit dem Rohrverbindungs-Applikator mit einem Kontrollgerät verbundener lokaler Computer oder ein Smartphone oder ein Tablet-PC oder ein über ein lokales Netzwerk (LAN) oder über ein WAN (wide area network) und das Internet angeschlossener entfernter Server sein.

Eine optionale Steuereinheit kann Schnittstellen zu und von optionalen Sensoren zur Bestimmung und Steuerung der an die zu erstellende Rohrverbindung abzugebenden Prozessparameter (Sollwerte) und zur Erfassung der an die zu erstellende Rohrverbindung abgegebenen Prozessparameter (Istwerte) umfassen.

Der Rohrverbindungs-Applikator mit einem Kontrollgerät kann Mittel zur Dosierung des Sollwertes der Prozessparameter und Mittel zur Erfassung des Istwertes der Prozessparameter umfassen.

Der Sollwert kann optional durch einen Benutzer eingestellt werden oder er wird von einer Steuereinheit des Rohrverbindungs-Applikators mit Kontrollgerät bestimmt und als Sollwert für den Prozessparameter bereitgestellt.

Die Steuereinheit umfasst einen analogen Rechner mit wenigstens einer Ein- und Ausgabeschnittstelle oder vorteilhaft einen digitalen Rechner mit Signalprozessor, Programmspeicher, Datenspeicher und wenigstens einer Ein- und Ausgabeschnittstelle.

Das Mittel zur Istwerterfassung umfasst optional Sensoren zur Erfassung der Materialbeschaffenheit und/oder der Dimensionen der zu verbindenden Rohrelemente. Diese Daten werden beispielsweise über Kennzeichnungsmittel bereitgestellt, welche an der Muffe und/oder an einem oder beiden der zu verbindenden Rohrelemente angebracht sein können oder sie können vom Benutzer aus einer Datenbank abgerufen oder manuell eingegeben werden. Die Sensoren können beispielsweise Barcode-Scanner, RFID-Empfänger oder eine Eingabetastatur oder eine Schnittstelle zu einem Computer, wie beispielsweise ein Tablet-PC oder ein Smartphone zum Abruf dieser Daten aus einer Datenbank oder zur manuellen Erfassung der Materialbeschaffenheit und/oder der Dimensionen der zu verbindenden Rohrelemente umfassen.

Das Mittel zur Istwerterfassung umfasst ferner Sensoren zur Erfassung der Istwerte der an die steuerbaren Mittel zur Herstellung einer dauerhaften und/oder lösbaren Rohrverbindung eines ersten und/oder eines zweiten Rohrelements bezüglich der im Rohrverbindungsbereich angelegten Prozessparameter.

Die Sensoren zur Erfassung der Istwerte können optional einen Drucksensor zur Erfassung des Drucks eines fluiden Mediums zur Steuerung der steuerbaren Mittel zur Herstellung einer dauerhaften und/oder lösbaren Rohrverbindung umfassen, insbesondere eines an die Mittel zum Schließen oder Öffnen von Klemmmuffen angelegten resultierenden Drucks oder zeitlichen Druckverlaufs eines fluiden Mediums. Bevorzugter Weise erfolgt eine Kontrolle des Spannvorgangs über eine Überwachung des Druckverlaufs im Hohlraum der Muffe, beispielsweise an der Anschlussstelle zum Anlegen eines fluiden Druckmediums an eine Muffe.

Die Sensoren zur Erfassung der Istwerte können optional einen akustisch/elektrischen Schwingungswandler oder mechanisch/elektrischen Schwingungswandler innerhalb eines Frequenzbereichs von 5 Hz bis 100 kHz zur Erfassung des Körperschalls und/oder des zeitlichen Körperschallverlaufs und/oder des Raumschalls und/oder des zeitlichen Raumschallverlaufs im Rohrverbindungsbereich während der Steuerung der steuerbaren Mittel zur Herstellung einer dauerhaften und/oder lösbaren Rohrverbindung im Bereich der Rohrverbindung umfassen.

Die Sensoren zur Erfassung der Istwerte können optional einen Kraftsensor und/oder einen Drehmomentsensor zur Erfassung der an die Mittel zum Schließen oder Öffnen der kraft- und/oder formschlüssigen Verbindung der Rohrenden angelegten steuernden Kraft oder des steuernden Drehmoments oder des zeitlichen Kraft- oder Drehmomentverlaufs umfassen.

Die Sensoren zur Erfassung der Istwerte können optional einen Temperatursensor zur Erfassung der Temperatur oder des Temperaturverlaufs während der Steuerung der steuerbaren Mittel zur Herstellung einer dauerhaften Rohrverbindung und/oder lösbaren Rohrverbindung im Rohrverbindungsbereich umfassen.

Der Temperatursensor kann insbesondere vorteilhafter Weise einen Infrarot-Strahlungssensor oder einen Wärmebildsensor zur berührungslosen Erfassung der Temperatur umfassen.

Die Sensoren zur Erfassung der Istwerte können optional einen UltraschallGeber und einen Ultraschall-Empfänger zur Erfassung von mechanischen Spannungsverläufen im Material der Rohrelemente im Bereich der Rohrverbindung umfassen.

Die Sensoren zur Erfassung der Istwerte können optional einen Röntgenstrahlungs-Geber und einen Röntgenstrahlungs-Empfänger zur Erfassung von mechanischen Spannungsverläufen im Material der Rohrelemente im Bereich der Rohrverbindung umfassen.

Die Sensoren zur Erfassung der Istwerte können optional einen optoelektronischen Sensor zur absoluten Positionserfassung der Rohrenden im Raum und/oder zur relativen Positionserfassung der Rohrenden zueinander und/oder zur relativen Positionserfassung wenigstens eines der Rohrenden zur Muffe umfassen. Zur Unterstützung können an den Rohrenden optische Markierungen anbringbar sein. Der optoelektronische Sensor kann dabei neben dem Frequenzbereich des sichtbaren Lichtspektrums auch den Frequenzbereich der nichtsichtbaren Infrarot- oder Ultraviolett- Strahlung umfassen. Optische Markierungen können absolute und oder relative Strichcodes auf den Rohrenden zur Bestimmung der Position der Rohrenden umfassen.

Die Sensoren zur Erfassung der Istwerte können optional einen induktiven Sensor und/oder einen kapazitiven Sensor und/oder einen magnetischen Sensor zur absoluten Positionserfassung der Rohrenden im Raum und/oder zur relativen Positionserfassung der Rohrenden zueinander und/oder zur relativen Positionserfassung wenigstens eines der Rohrenden zur Muffe umfassen. Zur Unterstützung können an den Rohrenden induktive, kapazitive oder magnetische Markierungen anbringbar sein. Induktive, kapazitive oder magnetische Markierungen können absolute und oder relative Strichcodes auf den Rohrenden zur Bestimmung der Position der Rohrenden umfassen.

Für eine berührungslose Detektion der Enden von Kunststoffrohren kann vorteilhafter Weise an einem oder an beiden Rohrenden der zu verbindenden Rohrelemente und/oder in der Muffe an einer definierten Stelle ein Metallkörper, beispielsweise eine Metallkugel oder ein Metallstreifen, als Indikator angebracht sein. Vorteilhaft verändert der Metallkörper bis zur korrekten Position oder beim Erreichen einer korrekten Position eines Rohrelements seine Position. Diese Positionsänderung kann direkt oder von außen durch die Wand eines Rohres oder der Muffe induktiv, kapazitiv oder magnetisch über einen Näherungssensor erfasst werden.

Die Sensoren zur Erfassung der Istwerte können optional einen Sensor für optische Codierungen oder Texterkennung, beispielsweise einen Barcodescanner, eine Kamera, einen Schriftzeichenleser oder dergleichen zur Erfassung von Materialeigenschaften und/oder Dimensionen der zu verbindenden Rohrenden umfassen. Die Informationen sind dabei vorteilhafter Weise über Kennzeichnungsmittel, beispielsweise als Barcode oder als Schriftzeichen an den zu verbindenden Rohrelementen, angebracht.

Die Sensoren zur Erfassung der Istwerte können optional einen RFID-Leser zur Erfassung von Materialeigenschaften und/oder Dimensionen der zu verbindenden Rohrenden umfassen. Die Informationen sind dabei vorteilhafter Weise über Kennzeichnungsmittel, beispielsweise als RFID-Tag, an den zu verbindenden Rohrelementen angebracht.

Die Sensoren zur Erfassung der Istwerte können optional einen GPS-Sensor zur Erfassung der Position der erstellten Rohrverbindung im dreidimensionalen Raum im Hinblick auf das Bezugssystem Erde und optional einen Zeitgeber zur Feststellung eines Zeitstempels umfassen, um insbesondere bei komplexen und ausgedehnten Rohrsystemen eine Zuordnung zum Raum und der Zeit der hergestellten Rohrverbindung dokumentieren zu können. Der Zeitgeber kann optional auf ein funkgesteuertes Zeitsignal oder auf eine Zeitbasis der Steuereinheit oder eines nahen oder entfernten Computers zugreifen.

Die Sensoren zur Erfassung der Istwerte können optional Mittel zur Erfassung der persönlichen Kenndaten des Benutzers, beispielsweise einen RFID-Leser, einen Magnetstreifenleser, einen Barcodeleser oder eine Eingabetastatur zur Eingabe einer PIN oder einer sonstigen Benutzerkennung umfassen.

In einer vorteilhaften Ausgestaltung kann der Rohrverbindungs-Applikator mit einem Kontrollgerät in einem Akkuschrauber oder in einem Handkompressor integriert sein oder als Aufsatz auf einen Akkuschrauber oder auf einen Handkompressor ausgeführt sein.

Der Rohrverbindungs-Applikator mit einem Kontrollgerät wird in folgenden Schritten angewendet:
- Erfassen von Informationen, welche zur Identifikation von Rohrelementen und optional einer Muffe dienen, beispielsweise Materialzusammensetzung, Nennweite, Hersteller, Seriennummer oder Art der herzustellenden Verbindung,
- Ermitteln von Soll-Prozessparametern zur Steuerung eines Prozesssteuerungsmittels,
- Anlegen der Prozessparameter an steuerbare Mittel zur Herstellung einer dauerhaften Rohrverbindung und/oder lösbaren Rohrverbindung eines ersten Rohrelements und/oder eines zweiten Rohrelements,
- Optionales Erfassen der Istwerte der an die steuerbaren Mittel zur Herstellung einer dauerhaften Rohrverbindung und/oder lösbaren Rohrverbindung eines ersten Rohrelements und/oder eines zweiten Rohrelements angelegten Prozessparameter,
- Optionaler Vergleich der Istwerte der an die steuerbaren Mittel zur Herstellung einer dauerhaften Rohrverbindung und/oder lösbaren Rohrverbindung eines ersten Rohrelements und/oder eines zweiten Rohrelements angelegten Prozessparameter mit einem Toleranzband für die Sollwerte der Prozessparameter,
- Optionale Ausgabe des Ergebnisses an einen Benutzer über eine Anzeigeeinrichtung und/oder optional Dokumentation des Ergebnisses in einer Datenspeichereinrichtung oder über eine Ausgabevorrichtung wie einen Drucker.

Optional erfolgen vorteilhafter Weise zur Ergänzung der Dokumentation zusätzlich die Schritte:
- Erfassung persönlicher Kenndaten eines Benutzers
- Erfassung und Speichern der Uhrzeit und/oder der geographischen Position im Moment der Erstellung der Verbindung.

Der Rohrverbindungs-Applikator mit einem Kontrollgerät ermöglicht eine einfach bedienbare, rasche, sichere und nachvollziehbar dokumentierbare Montage und ggf. Demontage von Rohrverbindungen. Damit ermöglicht der Rohrverbindungs-Applikator mit einem Kontrollgerät die Überwachung, Qualitätssicherung und die Dokumentation einer beliebigen Verbindungsstelle von zwei Rohrenden. Dabei ist es unerheblich, welche Art der herzustellenden Verbindung, wie beispielsweise stumpfes Schweißen, Löten, Kleben der zu verbindenden Rohrelemente oder Schweißen, Löten, Kleben, Schrauben oder Klemmen oder Verformen unter Verwendung einer Muffe zur Verbindung der Rohrelemente angewendet werden soll und welche Rohmaterialien dabei involviert sind. Die Daten werden unmittelbar am Ort und zum Zeitpunkt erfasst, wenn die Verbindung erstellt wird.

Damit ist der Rohrverbindungs-Applikator mit einem Kontrollgerät und das Verfahren zum Herstellen einer Verbindung zwischen einem ersten Rohrelement und einem zweiten Rohrelement für alle Typen von Rohrverbindungssystemen mit Muffen, insbesondere für Steckmuffen, welche gemäß dem europäischen Patent EP 3 120 064 B1 ausgeführt sind, vorteilhaft anwendbar.

### 5. Kurze Beschreibung der Zeichnungen

Im Folgenden werden anhand von Figuren Ausführungsbeispiele der Erfindung beschrieben. Diese Figuren zeigen:
- Fig. 1: als Schnittbild eine Rohrverbindung mit zwei Rohrenden und einer Muffe,
- Fig. 2: als Schnittbild eine Rohrverbindung mit zwei Rohrenden und einer in einem Rohrende integrierten Muffe,
- Fig. 3: als Schnittbild eine Rohrverbindung mit zwei Rohrenden und einer stumpfen materialschlüssigen Verbindung,
- Fig. 4: als Blockdiagramm die Einbindung eines Rohrverbindungs-Applikators mit einem Kontrollgerät in ein System zur Erstellung einer Rohrverbindung mittels einer Muffe,
- Fig. 5: den prinzipiellen Soll-Druckverlauf im Hohlraum einer Steckmuffe nach dem europäischen Patent EP 3 120 064 B1.

### 6. Detaillierte Beschreibung

Ausführungsbeispiele der vorliegenden Erfindung sind nachfolgend nur beispielhaft beschrieben. Diese Beispiele stellen die besten Wege dar, die Erfindung in der Praxis umzusetzen, welche dem Anmelder derzeit bekannt sind, obwohl dies natürlich nicht die einzigen Wege sind, auf welchen dies erreicht werden könnte. Die Beschreibung legt die Funktionen des Beispiels und die Abfolge der Schritte für das Gestalten und den Betrieb des Beispiels dar. Jedoch können dieselben oder äquivalente Funktionen und Abfolgen von anderen Beispielen erzielt werden.

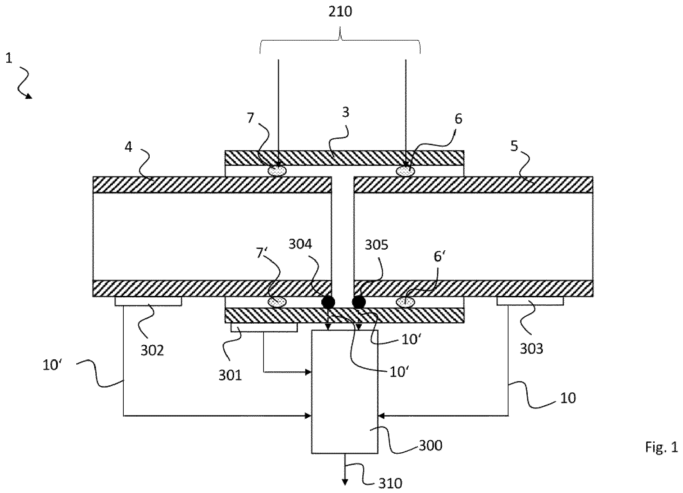

Fig. 1 zeigt als Schnittbild eine Rohrverbindung mit zwei Rohrenden und einer Muffe. Zum Herstellen einer Rohrverbindung 1 wird ein erstes Rohrelement 4 und ein zweites Rohrelement 5 zunächst noch nicht dauerhaft in eine Muffe 3 eingeführt. Der Istwert der aktuellen Position wird dabei über Mittel zur Istwerterfassung 300 bestimmt. Die Mittel zur Istwerterfassung 300 umfassen Sensoren zur Erfassung der Istwerte optional einen optoelektronischen Sensor (nicht dargestellt) zur absoluten Positionserfassung der Rohrenden des ersten Rohrelements 4 und des zweiten Rohrelements 5 im Raum und/oder zur relativen Positionserfassung der Rohrenden des ersten Rohrelements 4 und des zweiten Rohrelements 5 zueinander und/oder zur relativen Positionserfassung wenigstens eines der Rohrenden des ersten Rohrelements 4 und des zweiten Rohrelements 5 zur Muffe 3. Zur Unterstützung können an den Rohrenden des ersten Rohrelements 4 und des zweiten Rohrelements 5 optische Markierungen (nicht dargestellt) anbringbar sein. Der optoelektronische Sensor kann dabei neben dem Frequenzbereich des sichtbaren Lichtspektrums auch den Frequenzbereich der nichtsichtbaren Infrarot- oder Ultraviolett-Strahlung umfassen. Optische Markierungen können absolute und oder relative Strichcodes auf den Rohrenden des ersten Rohrelements 4 und des zweiten Rohrelements 5 zur Bestimmung der Position der Rohrenden zueinander und zur Bestimmung der Position der Rohrenden des ersten Rohrelements 4 und des zweiten Rohrelements 5 zur Muffe 3 umfassen.

Die Sensoren zur Erfassung der Istwerte umfassen optional einen induktiven Sensor und/oder einen kapazitiven Sensor und/oder einen magnetischen Sensor (nicht dargestellt) zur absoluten Positionserfassung der Rohrenden des ersten Rohrelements 4 und des zweiten Rohrelements 5 im Raum und/oder zur relativen Positionserfassung der Rohrenden des ersten Rohrelements 4 und des zweiten Rohrelements 5 zueinander und/oder zur relativen Positionserfassung wenigstens eines der Rohrenden des ersten Rohrelements 4 und des zweiten Rohrelements 5 zur Muffe 3. Zur Unterstützung können an den Rohrenden induktive, kapazitive oder magnetische Markierungen (nicht dargestellt) anbringbar sein. Induktive, kapazitive oder magnetische Markierungen können absolute und oder relative Codes auf den Rohrenden zur Bestimmung der Position der Rohrenden umfassen.

Für eine berührungslose Detektion der Enden von Kunststoffrohren kann an einem oder an beiden Rohrenden des ersten Rohrelements 4 und des zweiten Rohrelements 5 der zu verbindenden Rohrelemente und/oder in der Muffe 3 an einer definierten Stelle als Mittel zur Positionserfassung 304, 305 ein Metallkörper, beispielsweise eine Metallkugel oder ein Metallstreifen, als Indikator angebracht sein. Vorteilhafter Weise verändert das Mittel zur Positionserfassung 304, 305 bis zur korrekten Position oder beim Erreichen einer korrekten Position eines Rohrelements 4, 5 seine Position. Diese Positionsänderung kann als Istwert der Prozessparameter 10' direkt oder von außen durch die Wand eines Rohres 4, 5 oder der Muffe 3 induktiv, kapazitiv oder magnetisch über einen Näherungssensor innerhalb der Mittel zur Istwerterfassung 300 erfasst werden.

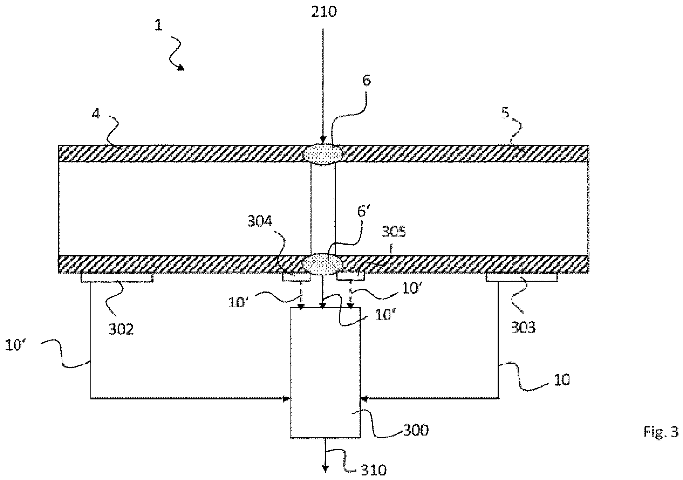

Die Mittel zur Positionserfassung 304, 305 sind auch im Fall einer stumpfen Verbindung eines ersten Rohrelements 4 mit einem zweiten Rohrelement 5, gemäß Fig. 3 vorteilhaft anwendbar.

Der Rohrverbindungs-Applikator mit einem Kontrollgerät 100 umfasst im Rohrverbindungsbereich für eine berührungslose Detektion der Enden von Kunststoffrohren an einem oder an beiden Rohrenden des ersten Rohrelements 4 und des zweiten Rohrelements 5 der zu verbindenden Rohrelemente und/oder in der Muffe 3 wenigstens ein Mittel zur Positionserfassung 304, 305, wobei das Mittel zur Positionserfassung 304, 305 bis zur korrekten Position oder beim Erreichen einer korrekten Position eines Rohrelements 4, 5 seine Position ändert und die Positionsänderung als Istwert der Prozessparameter 10' induktiv, kapazitiv oder magnetisch über einen Näherungssensor innerhalb der Mittel zur Istwerterfassung 300 erfasst werden.

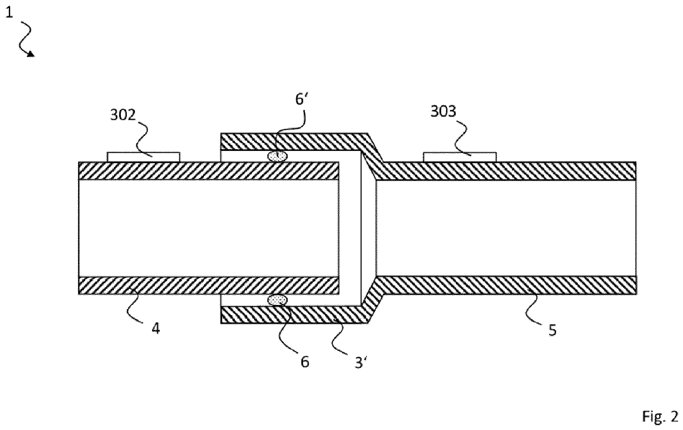

Eine Muffe 3 ist entweder ein Bauteil, welches ein Ende eines ersten Rohrelements 4 und ein Ende eines zweiten Rohrelements 5 in sich aufnimmt oder eine durch eine definierte Erweiterung (dargestellt in Fig. 2) des Innendurchmessers am Ende eines zweiten Rohrelements 5 gebildete Muffe 3', in welche ein Ende eines ersten Rohrelements 4 einfügbar ist und so jeweils das erste Rohrelement 4 mit dem zweiten Rohrelement 5 zunächst noch nicht dauerhaft miteinander verbindet.

Eine dauerhafte Rohrverbindung wird nach Herstellung einer zunächst noch nicht dauerhaften Rohrverbindung über Mittel zur Herstellung einer dauerhaften Rohrverbindung 6, 6', 7, 7' hergestellt. Optional ist die Rohrverbindung wieder lösbar.

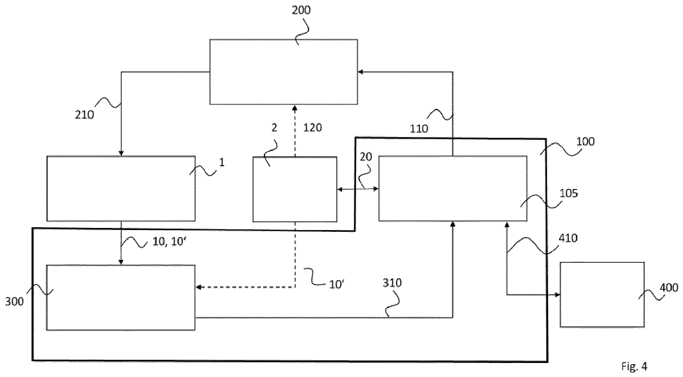

Die Mittel zur Herstellung einer dauerhaften Rohrverbindung und/oder lösbaren Rohrverbindung umfassen dabei Prozesssteuerungsmittel 200 (dargestellt in Fig. 4) zur Herstellung einer kraftschlüssigen Verbindung und/oder formschlüssigen Verbindung und/oder materialschlüssigen Verbindung zweier Rohrelemente 4, 5 mittels einer Muffe 3, beispielsweise kraft- oder drehmomentgesteuerte Mittel zum Schließen oder Öffnen von Schraubverbindungen, kraft- oder drehmomentgesteuerte Mittel zum Schließen oder Öffnen von Klemmmuffen, steuerbare Schweißgeräte oder steuerbare Lötgeräte, mechanisch, hydraulisch, pneumatisch oder elektrisch steuerbare Schrumpf- oder Pressvorrichtungen, insbesondere auch solche nach dem europäischen Patent EP 3 120 064 B1 arbeitende Steckmuffen oder Kleberdosier- und Haltevorrichtungen zum Verbinden zweier Rohrelemente.

Das Prozesssteuerungsmittel 200 (dargestellt in Fig. 4) erzeugt die zur Herstellung einer dauerhaften Verbindung je nach Art der herzustellenden Verbindung definierten Prozessparameter 210.

Die vom Prozesssteuerungsmittel 200 an die zu erstellende Rohrverbindung 1 abzugebenden Prozessparameter 210 zur Steuerung der steuerbaren Mittel zur Herstellung einer dauerhaften und/oder lösbaren Rohrverbindung 6, 6', 7, 7' zweier Rohrelemente 4, 5 mittels einer Muffe 3 umfassen beispielsweise
- den Vorschub zum Herstellen einer definierten Eindringtiefe eines ersten Rohrelements 4 und/oder eines zweiten Rohrelements 5 in die Muffe 3 oder einer definierten Eindringtiefe des ersten Rohrelements 4 in die durch das zweite Rohrelement 5 bereitgestellte Muffe 3',
- das Drehmoment zwischen der Muffe 3, 3' und einem ersten Rohrelement 4 und/oder zweiten Rohrelement 5 wirkenden Schraubverbindung, beispielsweise erzeugt durch einen elektrisch, pneumatisch oder hydraulisch betriebenen Handschrauber mit einem für die Mittel zur Herstellung der dauerhaften Rohrverbindung passenden Schrauberaufsatz,
- den pneumatischen und/oder hydraulischen Steuerdruck eines Fluids zur Steuerung einer Klemmwirkung der Mittel zur Herstellung der dauerhaften Rohrverbindung 6, 6', 7, 7' , beispielsweise für eine nach dem europäischen Patent EP 3 120 064 B1 arbeitenden Steckmuffe, beispielsweise angelegt über ein mechanisch oder elektrisch steuerbares Ventil zur Steuerung von Druckluft, welche aus einem Druckluftbehälter über einen Druckluftschlauch zugeführt wird, oder zugeführt aus einer Druckluftpatrone,
- die Materialzusammensetzung eines Verbindungsmittels wie beispielsweise die Zusammensetzung einer Schweißelektrode, deren Dosierung und Vorschub und/oder eine Schutzgaszusammensetzung oder die Dosierung und Zusammensetzung eines Lötmittels und/oder eines Flussmittels,
- die zugeführte oder abgeführte Wärme zur Erzeugung einer definierten Temperatur an einem steuerbaren Mittel zur Herstellung einer dauerhaften und/oder lösbaren Rohrverbindung 6, 6', 7, 7', beispielsweise durch eine kraftschlüssige Verbindung und/oder eine formschlüssige Verbindung und/oder eine materialschlüssige Verbindung, beispielsweise einer Schweiß- oder Lötverbindung,
- die Mischung und/oder die Dosierung von Kleberkomponenten und gegebenenfalls die Dauer und Intensität der Zufuhr von härtender Strahlung wie beispielsweise ultraviolettem Licht zur Aushärtung einer Klebeverbindung,
- Frequenz, Amplitude, Abstand und zeitliches Profil einer Ultraschallschweißvorrichtung für Kunststoff,
- Amplitude, Abstand und zeitliches Profil einer Laserschweißvorrichtung für Kunststoff.

Der Rohrverbindungs-Applikator mit einem Kontrollgerät 100 (dargestellt in Fig. 4) steuert entweder direkt über Soll-Prozessparameter 110 oder unter Vorgabe der Soll-Prozessparameter 110 über den Benutzer 2 über eine optionale manuelle Schnittstelle 120 das Prozesssteuerungsmittel 200 zur Dosierung der Prozessparameter 210 und umfasst dabei Mittel zur Istwerterfassung 300 der Prozessparameter 210. Die Mittel zur Istwerterfassung wandeln die Istwerte 10, 10' der Prozessparameter um in elektrische Istwerte der Prozessparameter 310, welche an die Steuereinheit 105 des Rohrverbindungs-Applikators mit einem Kontrollgerät 100 zur weiteren Verarbeitung zurückgeleitet werden.

Die Soll-Prozessparameter 110 werden entweder vom Rohrverbindungs-Applikator mit einem Kontrollgerät 100 direkt an das Prozesssteuerungsmittel 200 abgegeben oder die Soll-Prozessparameter 110 werden manuell durch einen Benutzer 2 über eine optionale manuelle Schnittstelle 120 unter Vorgabe der Soll-Prozessparameter 110 vom Rohrverbindungs-Applikator mit einem Kontrollgerät 100 an das Prozesssteuerungsmittel 200 abgegeben. Die Vorgabe der vom Rohrverbindungs-Applikator mit einem Kontrollgerät 100 ermittelten Soll-Prozessparameter 110 erfolgt über eine Schnittstelle zur Eingabe vom Benutzer und/oder zur Ausgabe an den Benutzer 20 oder über eine Schnittstelle zu einem Computer 410 und über ein Ausgabegerät eines Computers 400, beispielsweise das Display und/oder den Lautsprecher oder den Kopfhörer eines Smartphones oder Tablet-PC oder über ein Display oder eine Ausgabevorrichtung wie einen Drucker des Computers 400.

Der Soll-Prozessparameter 110 kann optional durch einen Benutzer 2 über eine Schnittstelle zur Eingabe vom Benutzer und/oder zur Ausgabe an den Benutzer 20 an den Rohrverbindungs-Applikator mit einem Kontrollgerät 100 eingegeben werden oder er wird von einer Steuereinheit 105 des Rohrverbindungs-Applikators mit einem Kontrollgerät 100 bestimmt und als Soll-Prozessparameter 110 an das Prozesssteuerungsmittel 200 zur Erzeugung des Prozessparameters 210 an die steuerbaren Mittel zur Herstellung einer dauerhaften und/oder lösbaren Verbindung 6, 6', 7, 7' eines ersten Rohrelements 4 und/oder eines zweiten Rohrelements 5, beispielsweise in Form einer kraftschlüssigen Verbindung und/oder einer formschlüssigen Verbindung und/oder einer materialschlüssigen Verbindung bezüglich einer Muffe bereitgestellt.

Das Mittel zur Istwerterfassung 300 umfasst optional Sensoren zur Erfassung der Materialbeschaffenheit und/oder der Dimensionen der zu verbindenden Rohrelemente. Diese Daten werden beispielsweise über Kennzeichnungsmittel 301, 302, 303 bereitgestellt, welche an der Muffe 3 und/oder an einem oder an beiden der zu verbindenden Rohrelemente 4, 5 angebracht sein können oder sie können vom Benutzer 2 aus einer Datenbank abgerufen oder manuell eingegeben werden. Die Sensoren können beispielsweise Barcode-Scanner, RFID-Empfänger oder eine Eingabetatstatur oder eine Schnittstelle zu einem Computer, wie beispielsweise ein Tablet-PC oder ein Smartphone zum Abruf dieser Daten aus einer Datenbank oder zur manuellen Erfassung der Materialbeschaffenheit und/oder der Dimensionen der zu verbindenden Rohrelemente 4, 5 umfassen.

Fig. 2 zeigt als Schnittbild eine Rohrverbindung mit zwei Rohrenden und einer in einem Rohrende integrierten Muffe 3'. Eine Muffe 3, 3' im Sinne dieser Erfindung ist entweder ein Bauteil, welches ein Ende eines ersten Rohrelements 4 und ein Ende eines zweiten Rohrelements 5 in sich aufnimmt oder eine durch eine definierte Erweiterung des Innendurchmessers am Ende eines zweiten Rohrelements 5 gebildete Muffe 3', in welches ein Ende eines ersten Rohrelements 4 einfügbar ist und so jeweils das erste Rohrelement 4 mit dem zweiten Rohrelement 5 zunächst noch nicht dauerhaft miteinander verbindet. Die Ausführungen in der Beschreibung zu Fig. 1 zur Muffe 3 gelten sinngemäß auch für die Muffe 3'.

Fig. 3 zeigt als Schnittbild eine Rohrverbindung mit zwei Rohrenden und einer stumpfen materialschlüssigen Verbindung, Zum Herstellen einer Rohrverbindung 1 wird ein erstes Rohrelement 4 und ein zweites Rohrelement 5 zunächst stumpf in einer definierten Distanz positioniert. Der Istwert der aktuellen Position wird dabei über Mittel zur Istwerterfassung 300 bestimmt. Die Mittel zur Istwerterfassung 300 umfassen Sensoren zur Erfassung der Istwerte optional einen optoelektronischen Sensor (nicht dargestellt) zur absoluten Positionserfassung der Rohrenden des ersten Rohrelements 4 und des zweiten Rohrelements 5 im Raum und/oder zur relativen Positionserfassung der Rohrenden des ersten Rohrelements 4 und des zweiten Rohrelements 5 zueinander. Zur Unterstützung können an den Rohrenden des ersten Rohrelements 4 und des zweiten Rohrelements 5 optische Markierungen (nicht dargestellt) anbringbar sein. Der optoelektronische Sensor kann dabei neben dem Frequenzbereich des sichtbaren Lichtspektrums auch den Frequenzbereich der nichtsichtbaren Infrarot- oder Ultraviolett-Strahlung umfassen. Optische Markierungen können absolute und oder relative Strichcodes auf den Rohrenden des ersten Rohrelements 4 und des zweiten Rohrelements 5 zur Bestimmung der Position der Rohrenden zueinander umfassen.

Die Sensoren zur Erfassung der Istwerte 300 umfassen optional einen induktiven Sensor und/oder einen kapazitiven Sensor und/oder einen magnetischen Sensor (nicht dargestellt) zur absoluten Positionserfassung der Rohrenden des ersten Rohrelements 4 und des zweiten Rohrelements 5 im Raum und/oder zur relativen Positionserfassung der Rohrenden des ersten Rohrelements 4 und des zweiten Rohrelements 5 zueinander. Zur Unterstützung können an den Rohrenden induktive, kapazitive oder magnetische Markierungen (nicht dargestellt) anbringbar sein. Induktive, kapazitive oder magnetische Markierungen können absolute und oder relative Codes auf den Rohrenden zur Bestimmung der Position der Rohrenden umfassen.

Für eine berührungslose Detektion der Enden von Kunststoffrohren kann an einem oder an beiden Rohrenden des ersten Rohrelements 4 und des zweiten Rohrelements 5 der zu verbindenden Rohrelemente an einer definierten Stelle als Mittel zur Positionserfassung 304, 305 ein Metallkörper, beispielsweise eine Metallkugel oder ein Metallstreifen, als Indikator angebracht sein.

Die Mittel zur Positionserfassung 304, 305 sind insbesondere auch im Fall einer stumpfen Verbindung eines ersten Rohrelements 4 mit einem zweiten Rohrelement 5 vorteilhaft anwendbar.

Der Rohrverbindungs-Applikator mit einem Kontrollgerät 100 umfasst im dazu Rohrverbindungsbereich für eine berührungslose Detektion der Enden von Kunststoffrohren an einem oder an beiden Rohrenden des ersten Rohrelements 4 und des zweiten Rohrelements 5 der zu verbindenden Rohrelemente wenigstens ein Mittel zur Positionserfassung 304, 305, wobei das Mittel zur Positionserfassung 304, 305 bis zur korrekter Position eines Rohrelements **4,** 5 seine Position ändert und die Positionsänderung als Istwert der Prozessparameter 10' induktiv, kapazitiv oder magnetisch über einen Näherungssensor innerhalb der Mittel zur Istwerterfassung 300 erfasst werden.

Eine dauerhafte Rohrverbindung wird nach Herstellung einer zunächst noch nicht dauerhaften Rohrverbindung durch definierte Positionierung des ersten Rohrelements bezüglich des zweiten Rohrelements über Mittel zur Herstellung einer dauerhaften Rohrverbindung 6, 6' hergestellt.

Die Mittel zur Herstellung einer dauerhaften Rohrverbindung umfassen dabei Prozesssteuerungsmittel 200 (dargestellt in Fig. 4) zur Herstellung einer materialschlüssigen Verbindung zweier Rohrelemente 4, 5 steuerbarer Schweißgeräte oder steuerbarer Lötgeräte, oder steuerbarer Kleberdosier- und Haltevorrichtungen zum Verbinden zweier Rohrelemente.

Das Prozesssteuerungsmittel 200 (dargestellt in Fig. 4) erzeugt die zur Herstellung einer dauerhaften Verbindung je nach Art der herzustellenden Verbindung definierten Prozessparameter 210.

Die vom Prozesssteuerungsmittel 200 an die zu erstellende Rohrverbindung 1 abzugebenden Prozessparameter 210 zur Steuerung der steuerbaren Mittel zur Herstellung einer dauerhaften Rohrverbindung 6, 6' zweier Rohrelemente 4, 5 umfassen beispielsweise
- den Vorschub zum Herstellen einer definierten Position eines ersten Rohrelements 4 und/oder eines zweiten Rohrelements 5 im Rohrverbindungsbereich
- die Materialzusammensetzung eines Verbindungsmittels wie beispielsweise die Zusammensetzung einer Schweißelektrode, deren Dosierung und Vorschub und/oder eine Schutzgaszusammensetzung oder die Dosierung und Zusammensetzung eines Lötmittels und/oder eines Flussmittels,
- die zugeführte oder abgeführte Wärme zur Erzeugung einer definierten Temperatur an einem steuerbaren Mittel zur Herstellung einer dauerhaften, materialschlüssigen Rohrverbindung 6, 6', beispielsweise einer Schweiß- oder Lötverbindung,
- die Mischung und/oder die Dosierung von Kleberkomponenten und gegebenenfalls die Dauer und Intensität der Zufuhr von härtender Strahlung wie beispielsweise ultraviolettem Licht zur Aushärtung einer Klebeverbindung,
- Frequenz, Amplitude, Abstand und zeitliches Profil einer Ultraschallschweißvorrichtung für Kunststoff,
- Amplitude, Abstand und zeitliches Profil einer Laserschweißvorrichtung.

Der Rohrverbindungs-Applikator mit einem Kontrollgerät 100 (dargestellt in Fig. 4) steuert entweder direkt über Soll-Prozessparameter 110 oder unter Vorgabe der Soll-Prozessparameter 110 über den Benutzer 2 über eine optionale manuelle Schnittstelle 120 das Prozesssteuerungsmittel 200 zur Dosierung der Prozessparameter 210 und umfasst dabei Mittel zur Istwerterfassung 300 der Prozessparameter 210. Die Mittel zur Istwerterfassung wandeln die Istwerte 10' der Prozessparameter um in elektrische Istwerte der Prozessparameter 310, welche an die Steuereinheit 105 des Rohrverbindungs-Applikators mit einem Kontrollgerät 100 zur weiteren Verarbeitung zurückgeleitet werden.

Die Soll-Prozessparameter 110 werden entweder vom Rohrverbindungs-Applikator mit einem Kontrollgerät 100 direkt an das Prozesssteuerungsmittel 200 abgegeben oder die Soll-Prozessparameter 110 werden manuell durch einen Benutzer 2 über eine optionale manuelle Schnittstelle 120 unter Vorgabe der Soll-Prozessparameter 110 vom Rohrverbindungs-Applikator mit einem Kontrollgerät 100 an das Prozesssteuerungsmittel 200 abgegeben. Die Vorgabe der vom Rohrverbindungs-Applikator mit einem Kontrollgerät 100 ermittelten Soll-Prozessparameter 110 erfolgt über eine Schnittstelle zur Eingabe vom Benutzer und/oder zur Ausgabe an den Benutzer 20 oder über eine Schnittstelle zu einem Computer 410 und über ein Ausgabegerät eines Computers 400, beispielsweise das Display und/oder den Lautsprecher oder den Kopfhörer eines Smartphones oder Tablet-PC oder über ein Display oder eine Ausgabevorrichtung wie einen Drucker des Computers 400.

Der Soll-Prozessparameter 110 kann optional durch einen Benutzer 2 über eine Schnittstelle zur Eingabe vom Benutzer und/oder zur Ausgabe an den Benutzer 20 an den Rohrverbindungs-Applikator mit einem Kontrollgerät 100 eingegeben werden oder er wird von einer Steuereinheit 105 des Rohrverbindungs-Applikators mit einem Kontrollgerät 100 bestimmt und als Soll-Prozessparameter 110 an das Prozesssteuerungsmittel 200 zur Erzeugung des Prozessparameters 210 an die steuerbaren Mittel zur Herstellung einer dauerhaften materialschlüssigen Verbindung 6, 6' eines ersten Rohrelements 4 mit einem zweiten Rohrelement 5 bereitgestellt.

Das Mittel zur Istwerterfassung 300 umfasst optional Sensoren zur Erfassung der Materialbeschaffenheit und/oder der Dimensionen der zu verbindenden Rohrelemente. Diese Daten werden beispielsweise über Kennzeichnungsmittel 302, 303 bereitgestellt, welche an einem oder an beiden der zu verbindenden Rohrelemente 4, 5 angebracht sein können oder sie können vom Benutzer 2 aus einer Datenbank abgerufen oder manuell eingegeben werden. Die Sensoren können beispielsweise einen Barcode-Scanner, einen Schriftzeichenerkenner, eine Kamera, RFID-Empfänger oder eine Eingabetastatur oder eine Schnittstelle zu einem Computer, wie beispielsweise ein Tablet-PC oder ein Smartphone zum Abruf dieser Daten aus einer Datenbank oder zur manuellen Erfassung der Materialbeschaffenheit und/oder der Dimensionen der zu verbindenden Rohrelemente 4, 5 umfassen.

Fig. 4 zeigt als Blockdiagramm die Einbindung des Rohrverbindungs-Applikators mit einem Kontrollgerät 100 in ein System zur Erstellung einer Rohrverbindung. Der Rohrverbindungs-Applikator mit einem Kontrollgerät 100 stellt die Soll-Prozessparameter 110 zur Steuerung eines Prozesssteuerungsmittels 200 zur Herstellung einer Rohrverbindung 1 bereit. Der Rohrverbindungs-Applikator mit einem Kontrollgerät 100 erfasst dabei über das Mittel zur Istwerterfassung 300 die Ist-Prozessparameter 10, 10'.

Eine dauerhafte Rohrverbindung wird nach Herstellung einer zunächst noch nicht dauerhaften Rohrverbindung über Mittel zur Herstellung einer dauerhaften Rohrverbindung 6, 6', 7, 7' (dargestellt in Fig. 1. Fig. 2 und Fig. 3) hergestellt. Optional ist die Rohrverbindung wieder lösbar.

Die Mittel zur Herstellung einer dauerhaften und/oder lösbaren Rohrverbindung 6, 6', 7, 7' werden dabei vom Prozesssteuerungsmittel 200 zur Herstellung einer dauerhaften und/oder lösbaren Verbindung zweier Rohrenden gesteuert. Das Prozesssteuerungsmittel 200 umfasst beispielsweise kraft- oder drehmomentgesteuerte Mittel zum Schließen oder Öffnen von Schraubverbindungen, kraft- oder drehmomentgesteuerte Mittel zum Schließen oder Öffnen von Klemmmuffen, steuerbare Schweißgeräte oder steuerbare Lötgeräte, mechanisch, hydraulisch, pneumatisch oder elektrisch steuerbare Schrumpf oder Pressvorrichtungen insbesondere auch solche zur Betätigung von nach dem europäischen Patent EP 3 120 064 B1 arbeitenden Steckmuffen oder Kleberdosier- und Haltevorrichtungen zum Verbinden zweier Rohrelemente 4, 5.

Der Rohrverbindungs-Applikator mit einem Kontrollgerät 100 bestimmt anhand von elektrischen Istwerten der Prozessparameter 310, welche vom Mittel zur Istwerterfassung 300 aus beispielsweise von den Kennzeichnungsmitteln 301, 302, 303 (dargestellt in Fig. 1 und Fig. 3) abgegebenen Istwerten der Prozessparameter 10, 10' einerseits die physikalischen Parameter der Komponenten einer Rohrverbindung 1, beispielsweise den Typ und/oder das Material sowie die Abmessungen der Muffe 3, 3' und/oder des ersten Rohrelements 4 und/oder des zweiten Rohrelements 5, die Temperatur, und/oder den Luftdruck und/oder die Luftfeuchtigkeit an der Muffe 3, 3' und/oder am ersten Rohrelement 4 und/oder am zweiten Rohrelement 5 und/oder der Position des ersten Rohrelementes 4 und gegebenenfalls des zweiten Rohrelementes 5 bezüglich der Position des Rohrverbindungsbereichs, ermittelt daraus andererseits den Soll-Prozessparameter 110 für wenigstens einen vom Prozesssteuerungsmittel 200 an die zu erstellende Rohrverbindung 1 abzugebenden Prozessparameter 210 und den Verlauf der an die Rohrverbindung 1 abzugebenden Prozessparameter 210, das heißt, den definierten zeitlichen Verlauf in Vorzeichen und Betrag und gegebenenfalls der chemischen und/oder physikalischen Zusammensetzung wenigstens eines der von dem Prozesssteuerungsmittel 200 abgegebenen Prozessparameter 210 zur Herstellung einer dauerhaften und/oder lösbaren Rohrverbindung eines ersten Rohrelements 4 mit einem zweiten Rohrelement 5 . Alternativ oder zusätzlich kann der Soll-Prozessparameter 110 wenigstens eines von einem Prozesssteuerungsmittel 200 an die zu erstellende Rohrverbindung abzugebenden Prozessparameters 210 manuell durch einen Benutzer 2 über die Schnittstelle zur Eingabe vom Benutzer und/oder zur Ausgabe an den Benutzer 20 an den Rohrverbindungs-Applikator mit einem Kontrollgerät 100 eingegeben werden und wird von dort nach entsprechender Aufbereitung unter Berücksichtigung der anderen prozessrelevanten Daten als Soll-Prozessparameter 110 an das Prozesssteuerungsmittel 200 vorgegeben.

Soll-Prozessparameter 110 umfassen beispielsweise elektrische, mechanische, hydraulische oder pneumatische Signale zum Betrieb des Prozesssteuerungsmittels 200 zur Steuerung der steuerbaren Mittel zur Herstellung einer dauerhaften und/oder lösbaren Rohrverbindung 6, 6', 7, 7', insbesondere eines an die Mittel zum Schließen oder Öffnen von Klemmmuffen angelegten resultierenden Drucks oder zeitlichen Druckverlaufs.

Das Prozesssteuerungsmittel 200 umfasst beispielsweise einen Schraubaktuator, beispielsweise einen Akkuschrauber oder ein anderweitig elektrisch oder pneumatisch oder hydraulisch betriebenes Schraubwerkzeug mit definiert steuerbarem Drehmoment und/oder definiertem Drehmomentverlauf, einen Druckluftgenerator mit definiert steuerbarem Arbeitsdruck und definiertem Arbeitsdruckverlauf innerhalb eines fluiden Druckmediums, beispielsweise eine an einem Druckbehälter mit einem unter definiertem Druck stehenden fluiden Druckmedium angeschlossene Dosierpistole oder ein elektrisch oder pneumatisch oder hydraulisch betätigbares Druckluftventil oder einen Handkompressor oder eine Einweg- oder Mehrwegkartusche oder eine Druckpatrone, einen pneumatischen oder hydraulischen Druckgenerator mit definiert steuerbarem Arbeitsdruck und definiertem Arbeitsdruckverlauf innerhalb eines fluiden Druckmediums, einen Aktuator umfassend ein mechanisch, elektrisch, pneumatisch oder hydraulisch steuerbares Ventil zur Steuerung des Durchflusses und/oder des Drucks eines fluiden Druckmediums, insbesondere einen Generator und/oder einen Aktuator zur Erzeugung eines Drucks und eines definierten Druckverlaufs, beispielsweise einen Impuls oder einen anderen zeitlichen Verlauf innerhalb eines fluiden Druckmediums zur Steuerung einer Steckmuffe 3 nach dem europäischen Patent EP 3 120 064 B1, eine Klebedosiervorrichtung mit steuerbarer Konzentration und Menge eines Ein- oder Mehrkomponentenklebers, eine steuerbare Vorschubeinrichtung mit definierter Steuerung der Position einer Rohrkomponente 4, 5 bezüglich der Position im Rohrverbindungsbereich, eine Lötvorrichtung mit steuerbarer Temperatur und Temperaturverlauf, eine Schweißvorrichtung mit steuerbarer Temperatur und Temperaturverlauf und optional mit steuerbarer Zufuhr einer Schweißelektrode und optionaler Steuerung einer Schutzgaszufuhr, eine Laserschweißvorrichtung mit steuerbarer Temperatur und Temperaturverlauf oder eine Ultraschallschweißvorrichtung mit steuerbarer Temperatur und Temperaturverlauf, optional mit steuerbarer Arbeitsfrequenz und/oder Arbeitsamplitude.

Die vom Prozesssteuerungsmittel 200 an die zu erstellende Rohrverbindung 1 abzugebenden Prozessparameter 210 zur Steuerung der steuerbaren Mittel zur Herstellung einer dauerhaften und/oder lösbaren Rohrverbindung 6, 6', 7, 7' zweier Rohrelemente 4, 5 sind in der Beschreibung zu Fig. 1 und Fig. 3 beispielhaft beschrieben.

Der Rohrverbindungs-Applikator mit einem Kontrollgerät 100 steuert über die Soll-Prozessparameter 110 direkt oder über Vorgabe an den Benutzer 2 das Prozesssteuerungsmittel 200 zur Dosierung der Prozessparameter 210.

Der Rohrverbindungs-Applikator mit einem Kontrollgerät 100 umfasst Mittel zur Istwerterfassung 300 der Prozessparameter 210. Die Mittel zur Istwerterfassung 300 wandeln die Istwerte 10, 10' der Prozessparameter 210 um in elektrische Istwerte der Prozessparameter 310, welche an die Steuereinheit 105 des Rohrverbindungs-Applikators mit einem Kontrollgerät 100 zur weiteren Verarbeitung zurückgeleitet werden.

Der Soll-Prozessparameter 110 kann optional durch einen Benutzer 2 über die Schnittstelle zur Eingabe vom Benutzer und/oder zur Ausgabe an den Benutzer 20 an den Rohrverbindungs-Applikator mit einem Kontrollgerät 100 eingegeben werden oder er wird von einer Steuereinheit 105 des Rohrverbindungs-Applikators mit einem Kontrollgerät 100 bestimmt und als Soll-Prozessparameter 110 an das Prozesssteuerungsmittel 200 zur Erzeugung des Prozessparameters 210 an die steuerbaren Mittel zur Herstellung einer dauerhaften und/oder lösbaren Verbindung 6, 6', 7, 7' eines ersten und/oder eines zweiten Rohrelements 4, 5, beispielsweise in Form einer kraftschlüssigen Verbindung und/oder einer formschlüssigen Verbindung und/oder einer materialschlüssigen Verbindung , bereitgestellt.

Das Mittel zur Istwerterfassung 300 umfasst optional Sensoren zur Erfassung der Materialbeschaffenheit und/oder der Dimensionen der zu verbindenden Rohrelemente 4, 5 und/oder der Muffe 3, 3'. Diese Daten werden beispielsweise über Kennzeichnungsmittel 301, 302, 303 (dargestellt in Fig. 1 und Fig. 3) bereitgestellt, welche an der Muffe 3, 3' und/oder an einem oder beiden der zu verbindenden Rohrelemente 4, 5 angebracht sein können oder sie können vom Benutzer 2 aus einer Datenbank über eine Schnittstelle zum Computer 410 abgerufen oder manuell über die Schnittstelle zur Eingabe vom Benutzer und/oder zur Ausgabe an den Benutzer 20 eingegeben werden. Die Sensoren können beispielsweise einen Barcode-Scanner, einen Schriftzeichenerkenner, eine Kamera, einen RFID-Empfänger oder eine Eingabetastatur oder eine Schnittstelle 410 zu einem Computer, wie beispielsweise ein Tablet-PC oder ein Smartphone zum Abruf dieser Daten aus einer Datenbank oder zur manuellen Erfassung der Materialbeschaffenheit und/oder der Dimensionen der zu verbindenden Rohrelemente 4, 5 umfassen.

Der Rohrverbindungs-Applikator mit einem Kontrollgerät 100 umfasst im dargestellten Beispiel eine Schnittstelle zum Computer 410 über welche der Rohrverbindungs-Applikator mit einem Kontrollgerät 100 mit einem nahen oder entfernten Computer 400 verbunden ist.

Der Rohrverbindungs-Applikator mit einem Kontrollgerät 100 umfasst in diesem Beispiel neben der Option einer manuellen Bedienbarkeit durch den Benutzer 2 über die Schnittstelle zur Eingabe vom Benutzer und/oder zur Ausgabe an den Benutzer 20 oder über die optionale manuelle Schnittstelle 120 eine elektronische Steuereinheit 105.

Die Steuereinheit 105 umfasst einen analogen Rechner mit wenigstens einer Ein- und Ausgabeschnittstelle oder vorteilhaft einen digitalen Rechner mit Signalprozessor, Programmspeicher, Datenspeicher und wenigstens einer Ein- und Ausgabeschnittstelle 20, 410.

Die Steuereinheit 105 umfasst vorteilhaft einen Computer mit Daten- und Programmspeicher und/oder eine Schnittstelle zu einem Computer 410, beispielsweise einem Smartphone, Tablet-PC und/oder einem Server und/oder über eine Schnittstelle zur Eingabe vom Benutzer und/oder zur Ausgabe an den Benutzer 20 zur Steuerung der Prozessparameter 210 und zur Steuerung der Soll-Prozessparameter 110 und über eine Schnittstelle zur Erfassung der elektrischen Istwerte der Prozessparameter 310.

Die Steuereinheit 105 umfasst dabei Schnittstellen zu den Sensoren der Mittel zur Istwerterfassung 300 und die Schnittstelle zur Eingabe vom Benutzer und/oder zur Ausgabe an den Benutzer 20.

Das Mittel zur Istwerterfassung 300 umfasst Sensoren zur Erfassung der Istwerte der Prozessparameter 10, 10' der an die steuerbaren Mittel zur Herstellung dauerhaften und/oder lösbaren Rohrverbindung 6, 6', 7, 7' eines ersten Rohrelements 4 und/oder eines zweiten Rohrelements 5 bezüglich einer Muffe 3, 3' angelegten Prozessparameter 210.

Die Sensoren des Mittels zur Istwerterfassung 300 können dabei auch persönliche Daten oder die Kennung des Benutzers 2 als Istwert der Prozessparameter 10,10' erfassen, beispielsweise über einen RFID-Leser, Magnetstreifenleser, Barcodeleser oder eine Eingabetastatur zur Eingabe einer PIN oder einer sonstigen Benutzerkennung.

Die Sensoren zur Erfassung der Istwerte umfassen optional einen Drucksensor zur Erfassung des Drucks eines fluiden Mediums zur Steuerung der steuerbaren Mittel zur Herstellung einer dauerhaften und/oder lösbaren Rohrverbindung 6, 6', 7, 7', insbesondere eines an die Mittel zum Schließen oder Öffnen von Klemmmuffen angelegten resultierenden Drucks oder zeitlichen Druckverlaufs eines fluiden Mediums. Vorteilhaft erfolgt eine Kontrolle des Spannvorgangs über eine Überwachung des Druckverlaufs im Hohlraum der Muffe 3, 3', beispielsweise an der Anschlussstelle zum Anlegen eines fluiden Druckmediums an eine Muffe 3, 3'.

Die Sensoren zur Erfassung der Istwerte umfassen vorteilhaft einen akustisch/elektrischen Schwingungswandler oder mechanisch/elektrischen Schwingungswandler innerhalb eines Frequenzbereichs von 5 Hz bis 100 kHz zur Erfassung des Körperschalls und/oder des zeitlichen Körperschallverlaufs oder des Raumschalls und/oder des zeitlichen Raumschallverlaufs im Rohrverbindungsbereich während der Steuerung der steuerbaren Mittel zur Herstellung einer dauerhaften und/oder lösbaren Rohrverbindung 6, 6', 7, 7' im Bereich der Rohrverbindung 1.

Die Sensoren zur Erfassung der Istwerte umfassen vorteilhaft einen Kraftsensor und/oder einen Drehmomentsensor zur Erfassung der an die Mittel zur Herstellung einer dauerhaften und/oder lösbaren Rohrverbindung 6, 6', 7, 7' zum Schließen oder Öffnen der kraft- und/oder formschlüssigen Verbindung der Rohrenden angelegten steuernden Kraft oder des steuernden Drehmoments oder des zeitlichen Kraft- oder Drehmomentverlaufs. Der Kraftsensor und/oder Drehmomentsensor kann alternativ auch integraler Bestandteil des Prozesssteuerungsmittels 200, beispielsweise eines Akkuschraubers oder eines Handkompressors sein.

Die Sensoren zur Erfassung der Istwerte umfassen vorteilhaft einen Temperatursensor zur Erfassung der Temperatur oder des Temperaturverlaufs während der Steuerung der steuerbaren Mittel zur Herstellung einer dauerhaften und/oder lösbaren Rohrverbindung 6, 6', 7, 7' im Bereich der Rohrverbindung 1.

Der Temperatursensor kann insbesondere vorteilhaft einen Infrarot-Strahlungssensor oder einen Wärmebildsensor zur berührungslosen Erfassung der Temperatur umfassen.

Die Sensoren zur Erfassung der Istwerte umfassen optional einen UltraschallGeber und einen Ultraschall-Empfänger zur Erfassung von mechanischen Spannungsverläufen im Material der Rohrelemente im Bereich der Rohrverbindung 1,

Die Sensoren zur Erfassung der Istwerte umfassen optional einen Röntgenstrahlungs-Geber und einen Röntgenstrahlungs-Empfänger zur Erfassung von mechanischen Spannungsverläufen im Material der Rohrelemente im Bereich der Rohrverbindung 1.

Die Sensoren zur Erfassung der Istwerte umfassen optional einen optischen Barcodescanner zur Erfassung von Materialeigenschaften und/oder Dimensionen der zu verbindenden Rohrenden. Die Informationen sind dabei vorteilhaft über Kennzeichnungsmittel 301, 302, 303 als Barcode an den zu verbindenden Rohrenden und/oder an der Muffe 3, 3' angebracht.

Die Sensoren zur Erfassung der Istwerte umfassen optional einen RFID-Leser zur Erfassung von Materialeigenschaften und/oder Dimensionen der zu verbindenden Rohrenden. Die Informationen sind dabei vorteilhaft als RFID-Tag an den zu verbindenden Rohrelementen 4, 5 und/oder an der Muffe 3, 3' über Kennzeichnungsmittel 301, 302, 303 als Barcode an den zu verbindenden Rohrenden und/oder an der Muffe 3, 3' angebracht.

Die Sensoren zur Erfassung der Istwerte umfassen optional einen GPS-Sensor zur Erfassung der Position der erstellten Rohrverbindung im dreidimensionalen Raum im Hinblick auf das Bezugssystem Erde und optional einen Zeitgeber zur Feststellung eines Zeitstempels, um insbesondere bei komplexen und ausgedehnten Rohrsystemen eine Zuordnung zum Raum und der Zeit der hergestellten Rohrverbindung dokumentieren zu können.

Die Sensoren zur Erfassung der Istwerte umfassen optional Mittel zur Erfassung der persönlichen Kenndaten des Benutzers, beispielsweise einen RFID-Leser, Magnetstreifenleser, Barcodeleser oder eine Eingabetastatur.

Die Sensoren des Mittels zur Istwerterfassung 300 wandeln die Istwerte der Prozessparameter 10, 10' um in elektrische Istwerte der Prozessparameter 310, die von der Steuereinheit 105 des Rohrverbindungs-Applikators mit Kontrollgerät 100 weiterverarbeitet werden.

Vorteilhaft erfasst die Steuereinheit 105 das Datum, die Uhrzeit und die geographische Position der hergestellten Rohrverbindung und erfasst über die Mittel zur Istwerterfassung 300 kontinuierlich oder in definierten Zeitabständen den dabei erzielten tatsächlichen Verlauf der elektrischen Istwerte der Prozessparameter 310 wenigstens eines der an die Rohrverbindung 1 abzugebenden Prozessparameter 210.

Die Steuereinheit 105 bestimmt aus den elektrischen Istwerten der Prozessparameter 310 und/oder aus der Eingabe des Benutzers 2 über die Schnittstelle zur Eingabe vom Benutzer und/oder zur Ausgabe an den Benutzer 20 die Soll-Prozessparameter 110 zur Steuerung der Prozesssteuerungsmittel 200.

Die Steuereinheit 105 des Rohrverbindungs-Applikators mit einem Kontrollgerät 100 bedient über die Steuereinheit 105 die Schnittstelle zum Computer 410, über welche Eingaben von einem lokalen oder entfernten Computer 400 an die Steuereinheit 105 zur Steuerung des Rohrverbindungs-Applikators mit einem Kontrollgerät 100 möglich sind und Ausgaben und das Speichern von Ergebniswerten vom Rohrverbindungs-Applikator mit einem Kontrollgerät 100 an einen lokalen oder entfernten Computer 400 möglich sind.

Ein naher Computer 400 kann dabei ein über eine drahtgebundene oder drahtlose Schnittstelle 410 verbundenes Smartphone oder ein Tablet-PC sein, ein entfernter Computer 400 kann dabei beispielsweise ein über eine lokale Schnittstelle (LAN) 410 oder eine Weitbereichsschnittstelle (WAN) 410 und das Internet erreichbarer Server oder Computer sein.

Die Sollwerte und deren Toleranzen können dabei in der Steuereinheit 105 in einem Datenspeicher oder in einem nahen oder entfernten Computer 400, beispielsweise als Lookup-Tabelle oder als Datensatz in einer relationalen Datenbank abgespeichert werden. Der nahe oder entfernte Computer 400 kann ein über eine drahtgebundene, oder drahtlose Schnittstelle mit dem Rohrverbindungs-Applikator mit einem Kontrollgerät 100 verbundener lokaler Computer oder ein Smartphone, oder ein über ein lokales Netzwerk (LAN) oder über ein WAN (wide area network) und das Internet angeschlossener entfernter Server sein.

Vorteilhaft kann der Rohrverbindungs-Applikator mit einem Kontrollgerät 100 optional auf ein für die jeweilige Art der herzustellenden Verbindung und der Kombination von Materialkenndaten sich ergebende Soll-Prozessparameter 110 abgespeichertes Toleranzband zugreifen, vergleicht den jeweiligen Istwert der Prozessparameter 10, 10' beziehungsweise den elektrischen Istwert der Prozessparameter 310 mit dem Toleranzband des Soll-Prozessparameters 110 und gibt bei Abweichung eines Istwertes von der Soll-Toleranz einen Alarm über die Schnittstelle zur Eingabe vom Benutzer und/oder zur Ausgabe an den Benutzer 20 an den Benutzer 2 aus und/oder speichert ein Fehlerprotokoll. Die Ausgabe an den Benutzer 2 kann über eine Anzeige am Rohrverbindungs-Applikator mit einem Kontrollgerät 100 oder per Smartphone oder über einen nahen oder entfernten Drucker oder durch Übermitteln und Speichern der Daten an einen nahen oder entfernten Computer 400, beispielsweise per Smartphone erfolgen.

Der Rohrverbindungs-Applikator mit einem Kontrollgerät 100 für Prozesssteuerungsmittel 200 zum Steuern der an eine zu erstellende Rohrverbindung 1 abzugebenden Prozessparameter 210 zur Steuerung der steuerbaren Mittel zur Herstellung einer dauerhaften und/oder lösbaren Rohrverbindung 6, 6', 7, 7' zweier Rohrelemente 4, 5 mittels einer Muffe 3 3', umfasst ein Mittel zur Istwerterfassung 300, welches wenigstens einen Istwert der Prozessparameter 10, 10' erfasst und daraus einen Soll-Prozessparameter 110 ermittelt, mit welchem das Prozesssteuerungsmittel 200 steuerbar ist.

Der Rohrverbindungs-Applikator mit einem Kontrollgerät 100 vergleicht wenigstens einen Istwert der Prozessparameter 10, 10' mit wenigstens einem Soll-Prozessparameter 110.

Der Rohrverbindungs-Applikator mit einem Kontrollgerät 100 gibt bei Abweichung wenigstens eines Istwerts der Prozessparameter 10, 10' von wenigstens einem Toleranzwertebereich eines Soll-Prozessparameters 110 einen Alarm über eine Schnittstelle zur Eingabe vom Benutzer und/oder zur Ausgabe an den Benutzer 20 an einen Benutzer 2 aus und/oder erstellt ein Fehlerprotokoll und gibt dieses an den Benutzer 2 aus oder speichert das Fehlerprotokoll in einem nahen oder entfernten Computer 400.

Ein Beispiel eines erfindungsgemäßen Systems zum Herstellen einer Verbindung zwischen einem ersten Rohrelement 4 und einem zweiten Rohrelement 5 über eine Muffe 3, wobei die Muffe 3 eine Steckmuffe mit einem Klemmelement gemäß dem europäischem Patent EP 3 120 064 B1 umfasst, welches ein in Längsrichtung der Steckmuffe ein auf Schub koppelbares Spannelement aufweist, wobei das Klemmelement so geformt und ausgebildet ist, dass es bei Beaufschlagung einer axialen Kraft mittels einem fluiden Druckmedium seine Klemmwirkung in Form einer Schnappfunktion auf das erste Rohrelement 4 und das zweite Rohrelement 5 ausübt, umfasst ein Prozesssteuerungsmittel 200 in Form eines über einen Soll-Prozessparameter 110 steuerbaren Druckluftventils eines Prozesssteuerungsmittels 200, über welches ein Prozessparameter 210 in Form eines gesteuerten Druckluftverlaufs an die steuerbaren Mittel zur Herstellung einer dauerhaften und/oder lösbaren Rohrverbindung 6, 6', 7, 7' der Steckmuffe anlegbar ist, wodurch eine Klemmwirkung in Form einer Schnappfunktion auf das erste Rohrelement 4 und das zweite Rohrelement 5 ausübbar ist, umfasst Mittel zur Istwerterfassung 300 wenigstens eines der Ist-Prozessparameter 10, 10' in Form eines Druckluftverlaufs an den steuerbaren Mitteln zur Herstellung einer dauerhaften und/oder lösbaren Rohrverbindung 6, 6', 7, 7', welches die Ist-Prozessparameter 10, 10' als elektrische Ist-Prozessparameter 310 an eine Steuereinheit 105 eines Rohrverbindungs-Applikators mit Kontrollgerät 100 abgibt, welche aus den elektrischen Ist-Prozessparametern 310 die Soll-Prozessparameter 110 zur Steuerung des Prozesssteuerungsmittels 200 ermittelt und umfasst optional wenigstens einen Vergleich eines elektrischen Ist-Prozessparameters 310 mit wenigstens einem Soll-Prozessparameter 110 und gibt bei Abweichung von einem definierten Toleranzband einen Alarm an den Benutzer 2 aus und/oder gibt ein Fehlerprotokoll aus oder speichert ein Fehlerprotokoll ab.

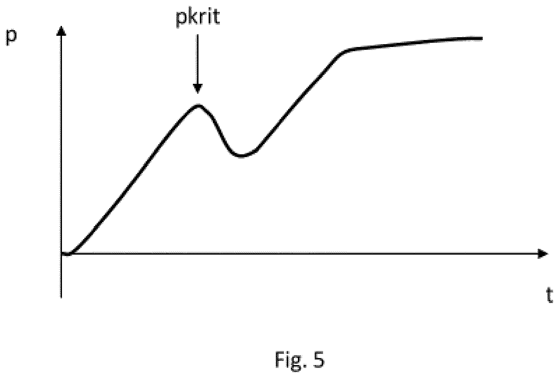

Fig. 5 zeigt den prinzipiellen Soll-Druckverlauf im Hohlraum einer Steckmuffe nach dem europäischen Patent EP 3 120 064 B1. Dieser beispielhafte charakteristische Verlauf eines Prozessparameters 210 zur Steuerung der steuerbaren Mittel zur Herstellung einer dauerhaften und/oder lösbaren Rohrverbindung 6, 6', 7, 7' kann als Istwert des Prozessparameters 10, 10' der steuernden Druckluft von einem Drucksensor des Mittels zur Istwerterfassung 300 erfasst, gewandelt und als elektrischer Istwert des Prozessparameters 310 an die Steuereinheit 105 des Rohrverbindungs-Applikators mit einem Kontrollgerät 100 weitergeleitet werden. Beispielsweise erzeugt das Prozessteuerungsmittel 200 aufgrund eines Soll-Prozessparameters 110, welcher durch den Benutzer 2 über die Schnittstelle 120 oder durch den Rohrverbindungs-Applikator mit einem Kontrollgerät 100 durch direkte Abgabe eines Soll-Prozessparameters 110 einen definierten Druckluftimpuls als Prozessparameter 210. Dieser verursacht im Hohlraum der Steckmuffe den in Fig. 4 dargestellten Druckverlauf, welcher beispielsweise an der Anschlussstelle zum Anlegen eines fluiden Druckmediums an der Steckmuffe, beziehungsweise einer Muffe 3, erfassbar ist.

So kann beispielsweise ein charakteristischer Punkt pkrit herangezogen werden, um die Qualität der Klemmverbindung zu beurteilen. Dieser Punkt ist alternativ oder zusätzlich auch akustisch als "Knackpunkt" auswertbar. Alternativ oder zusätzlich kann der gesamte Verlauf des Drucks und oder der akustischen Emission oder eines anderen Istwerts des Prozessparameters 10, 10' durch Vergleich mit einem Toleranzband des Soll-Prozessparameters 110 verglichen werden. Bei Abweichung des Istwerts des Prozessparameters 10, 10' der steuernden Druckluft beziehungsweise des entsprechenden elektrischen Istwerts des Prozessparameters 310 von einem definierten Toleranzband des Soll-Prozessparameters 110 erfolgt beispielsweise ein Alarm über die Schnittstelle zur Eingabe vom Benutzer und/oder zur Ausgabe an den Benutzer 20 an den Benutzer 2 und/oder das Speichern eines Fehlerprotokolls in der Steuereinheit 105 des Rohrverbindungs-Applikators mit Kontrollgerät 100 und/oder im nahen oder entfernten Computer 400.

### Liste der verwendeten Bezugszeichen:

- 1: Rohrverbindung
- 2: Benutzer
- 3, 3': Muffe
- 4: erstes Rohrelement
- 5: zweites Rohrelement
- 6, 6',: Mittel zur Herstellung einer dauerhaften und/oder lösbaren
- 7, 7': Rohrverbindung
- 10, 10': Istwert der Prozessparameter
- 20: Schnittstelle zur Eingabe vom Benutzer und/oder zur Ausgabe an den Benutzer
- 100: Rohrverbindungs-Applikator mit einem Kontrollgerät
- 105: Steuereinheit
- 110: Soll-Prozessparameter
- 120: optionale manuelle Schnittstelle
- 200: Prozesssteuerungsmittel
- 210: Prozessparameter
- 300: Mittel zur Istwerterfassung
- 301, 302,: Kennzeichnungsmittel
- 303: Kennzeichnungsmittel
- 304, 305: Mittel zur Positionserfassung
- 310: elektrische Istwerte der Prozessparameter
- 400: Computer
- 410: Schnittstelle zum Computer

## Patentansprüche

1. System zum Herstellen einer Verbindung zwischen einem ersten Rohrelement (4) und einem zweiten Rohrelement (5), umfassend eine Muffe (3), wobei die Muffe (3) eine Steckmuffe mit einem Klemmelement umfasst, welches ein in Längsrichtung der Steckmuffe ein auf Schub koppelbares Spannelement aufweist, wobei das Klemmelement so geformt und ausgebildet ist, dass es bei Beaufschlagung einer axialen Kraft mittels einem fluiden Druckmedium seine Klemmwirkung in Form einer Schnappfunktion auf das erste Rohrelement (4) und das zweite Rohrelement (5) ausübt, weiter umfassend ein Prozesssteuerungsmittel (200) in Form eines über einen Soll-Prozessparameter (110) steuerbaren Druckluftventils, über welches ein Prozessparameter (210) in Form eines gesteuerten Druckluftverlaufs an die steuerbaren Mittel zur Herstellung einer dauerhaften und/oder lösbaren Rohrverbindung (6, 6', 7, 7') der Steckmuffe anlegbar ist, wodurch eine Klemmwirkung in Form einer Schnappfunktion auf das erste Rohrelement (4) und das zweite Rohrelement (5) ausübbar ist, und umfassend Mittel zur Istwerterfassung (300) wenigstens eines der Ist-Prozessparameter (10, 10') in Form eines Druckluftverlaufs an den steuerbaren Mitteln zur Herstellung einer dauerhaften und/oder lösbaren Rohrverbindung (6, 6', 7, 7'), welches die Ist-Prozessparameter (10, 10') als elektrische Ist-Prozessparameter (310) an eine Steuereinheit (105) eines Rohrverbindungs-Applikators mit einem Kontrollgerät (100) abgibt, welche aus den elektrischen Ist-Prozessparametern (310) die Soll-Prozessparameter (110) zur Steuerung des Prozesssteuerungsmittels (200) ermittelt.

2. System nach Anspruch 1, umfassend den Rohrverbindungs-Applikator mit dem Kontrollgerät (100) für ein Prozesssteuerungsmittel (200) zum Steuern der an eine zu erstellende Rohrverbindung (1) abzugebenden Prozessparameter (210) zur Steuerung der steuerbaren Mittel zur Herstellung einer dauerhaften und/oder lösbaren Rohrverbindung (6, 6', 7, 7') zweier Rohrelemente (4, 5), **gekennzeichnet dadurch, dass** der Rohrverbindungs-Applikator mit einem Kontrollgerät (100) ein Mittel zur Istwerterfassung (300) umfasst, welches wenigstens einen Istwert der Prozessparameter (10, 10') erfasst und daraus einen Soll-Prozessparameter (110) ermittelt, mit welchem das Prozesssteuerungsmittel (200) steuerbar ist.

3. System nach Anspruch 2, umfassend den Rohrverbindungs-Applikator mit dem Kontrollgerät (100), wobei wenigstens ein Istwert der Prozessparameter (10, 10') mit wenigstens einem Soll-Prozessparameter (110) vergleichbar ist.

4. System nach Anspruch 3, umfassend den Rohrverbindungs-Applikator mit dem Kontrollgerät (100), wobei bei Abweichung wenigstens eines Istwerts der Prozessparameter (10, 10') von wenigstens einem Toleranzwertebereich eines Soll-Prozessparameters (110) ein Alarm über eine Schnittstelle zur Eingabe vom Benutzer und/oder zur Ausgabe an einen Benutzer (20) an einen Benutzer (2) ausgebbar ist.

5. System nach Anspruch 3, umfassend den Rohrverbindungs-Applikator mit dem Kontrollgerät (100), wobei bei Abweichung wenigstens eines Istwerts der Prozessparameter (10, 10') von wenigstens einem Toleranzwertebereich eines Soll-Prozessparameters (110) von einer Steuereinheit (105) des Rohrverbindungs-Applikators mit Kontrollgerät (100) ein Fehlerprotokoll erstellbar und an den Benutzer (2) ausgebbar oder in einem nahen oder entfernten Computer (400) speicherbar ist.

6. System nach einem der vorhergehenden Ansprüche 2 bis 5, umfassend den Rohrverbindungs-Applikator mit dem Kontrollgerät (100), wobei das Mittel zur Istwerterfassung (300) einen Sensor zur Erfassung des Drucks eines fluiden Mediums zur Steuerung der steuerbaren Mittel zur Herstellung einer dauerhaften und/oder lösbaren Rohrverbindung (6, 6', 7, 7') umfasst.

7. System nach einem der vorhergehenden Ansprüche 2 bis 6, umfassend den Rohrverbindungs-Applikator mit dem Kontrollgerät (100), wobei das Mittel zur Istwerterfassung (300) einen akustisch/elektrischen Schwingungswandler oder mechanisch/elektrischen Schwingungswandler innerhalb eines Frequenzbereichs von 5 Hz bis 100k Hz zur Erfassung des Körperschalls und/oder des zeitlichen Körperschallverlaufs (10, 10') und/oder des Raumschalls und/oder des zeitlichen Raumschallverlaufs (10, 10') im Rohrverbindungsbereich während der Steuerung der steuerbaren Mittel zur Herstellung einer dauerhaften und/oder lösbaren Rohrverbindung (6, 6', 7, 7') im Bereich der Rohrverbindung (1) umfasst.

8. System nach einem der vorhergehenden Ansprüche 2 bis 7, umfassend den Rohrverbindungs-Applikator mit dem Kontrollgerät (100), wobei das Mittel zur Istwerterfassung (300) einen Kraftsensor und/oder einen Drehmomentsensor zur Erfassung der an die Mittel zur Herstellung einer dauerhaften und/oder lösbaren Rohrverbindung (6, 6', 7, 7') zum Schließen oder Öffnen der kraft- und/oder formschlüssigen Verbindung der Rohrenden eines ersten Rohrelements (4) mit einem zweiten Rohrelement (5) angelegten Prozessparameters (10, 10') einer steuernden Kraft oder des steuernden Drehmoments oder des zeitlichen Kraft- oder Drehmomentverlaufs umfasst.

9. System nach einem der vorhergehenden Ansprüche 2 bis 8, umfassend den Rohrverbindungs-Applikator mit dem Kontrollgerät (100), wobei das Mittel zur Istwerterfassung (300) einen Temperatursensor zur Erfassung der Temperatur oder des Temperaturverlaufs während der Steuerung der steuerbaren Mittel zur Herstellung dauerhaften und/oder lösbaren Rohrverbindung (6, 6', 7, 7') im Bereich der Rohrverbindung (1) umfasst.

10. System nach einem der vorhergehenden Ansprüche 2 bis 9, umfassend den Rohrverbindungs-Applikator mit dem Kontrollgerät (100), wobei das Mittel zur Istwerterfassung (300) einen Sensor für optische Codierungen, beispielsweise einen optischen Barcodescanner und/oder einen Sensor für Texterkennung, beispielsweise eine Kamera oder einen Schriftzeichenleser, und/oder einen RFID-Leser zur Erfassung von Materialeigenschaften und/oder Dimensionen der zu verbindenden Rohrelemente (4, 5) und/oder der Muffe (3, 3') umfasst.

11. System nach einem der vorhergehenden Ansprüche 2 bis 10, umfassend den Rohrverbindungs-Applikator mit dem Kontrollgerät (100), wobei das Mittel zur Istwerterfassung (300) einen GPS-Sensor zur Erfassung der Position der erstellten Rohrverbindung im dreidimensionalen Raum im Hinblick auf das Bezugssystem Erde und/oder einen Zeitgeber zur Erfassung eines Zeitstempels umfasst.

12. System nach einem der vorhergehenden Ansprüche 2 bis 11, umfassend den Rohrverbindungs-Applikator mit dem Kontrollgerät (100), wobei das Mittel zur Istwerterfassung (300) Mittel zur Erfassung der persönlichen Kenndaten des Benutzers, beispielsweise einen RFID-Leser, Magnetstreifenleser, Barcodeleser und/oder eine Eingabetastatur umfasst.

13. System nach einem der vorhergehenden Ansprüche 2 bis 12, umfassend den Rohrverbindungs-Applikator mit dem Kontrollgerät (100), wobei im Rohrverbindungsbereich für eine berührungslose Detektion der Enden von Kunststoffrohren an einem oder an beiden Rohrenden des ersten Rohrelements (4) und des zweiten Rohrelements (5) der zu verbindenden Rohrelemente und/oder in der Muffe (3) wenigstens ein Mittel zur Positionserfassung (304, 305) angebracht ist, wobei das Mittel zur Positionserfassung (304, 305) bis zur korrekten Position oder beim Erreichen einer korrekten Position eines Rohrelements (4, 5) seine Position ändert und die Positionsänderung als Istwert der Prozessparameter (10') induktiv, kapazitiv oder magnetisch über einen Näherungssensor innerhalb der Mittel zur Istwerterfassung (300) erfassbar sind.

14. Verfahren zum Herstellen einer Verbindung zwischen einem ersten Rohrelement (4) und einem zweiten Rohrelement (5) mittels des Systems gemäß Anspruch 1, wobei das Verfahren die folgenden Schritte umfasst:
- Erfassen der Informationen zur Identifikation der Rohrelemente (4, 5), und optional der Muffe (3, 3') beispielsweise der Materialzusammensetzung, der Nennweite, des Herstellers, der Seriennummer oder Art der herzustellenden Verbindung,
- Ermitteln der Soll-Prozessparameter (110) zur Steuerung des Prozesssteuerungsmittels (200),
- Anlegen der Prozessparameter (210) an die steuerbaren Mittel zur Herstellung einer dauerhaften und/oder lösbaren Rohrverbindung (6, 6', 7., 7') eines ersten und/oder eines zweiten Rohrelements (4, 5) bezüglich einer Muffe (3, 3'),
- Optionales Erfassen der Istwerte (10, 10') der an die steuerbaren Mittel zur Herstellung dauerhaften und/oder lösbaren Rohrverbindung (6, 6', 7, 7') eines ersten und/oder eines zweiten Rohrelements bezüglich einer Muffe (3, 3') angelegten Prozessparameter (210),
- Optionaler Vergleich der Istwerte (10, 10') der an die steuerbaren Mittel zur Herstellung dauerhaften und/oder lösbaren Rohrverbindung (6, 6', 7., 7') eines ersten und/oder eines zweiten Rohrelements (4, 5) bezüglich einer Muffe (3, 3') angelegten Prozessparameter (210) mit einem Toleranzband für die Soll-Prozessparameter (110),
- Optionale Ausgabe des Ergebnisses an einen Benutzer über eine Anzeigeeinrichtung und/oder optional Dokumentation des Ergebnisses in einer Datenspeichereinrichtung oder über einen Drucker.

15. Verfahren nach Anspruch 14, zusätzlich umfassend die Schritte:
- Erfassung der persönlichen Kenndaten des Benutzers,
- Erfassung und Speichern der Uhrzeit und/oder der geographischen Position im Moment der Erstellung der Verbindung.

## Claims

1. System for producing a connection between a first pipe element (4) and a second pipe element (5), comprising a sleeve (3), the sleeve (3) comprising a plug-in sleeve with a clamping element which has a tensioning element which can be coupled on thrust in the longitudinal direction of the plug-in sleeve, the clamping element being shaped and designed in such a way that it exerts its clamping effect in the form of a snap function on the first pipe element (4) and the second pipe element (5) when an axial force is applied by means of a fluid pressure medium, further comprising a process control means (200) in the form of a compressed air valve which can be controlled via a set process parameter (110) and via which a process parameter (210) in the form of a controlled compressed air flow is transmitted to the controllable means for producing a permanent and/or releasable pipe connection (6, 6', 7, 7') of the plug-in sleeve, whereby a clamping effect in the form of a snap function can be exerted on the first pipe element (4) and the second pipe element (5), and comprising means for detecting the actual value (300) of at least one of the actual process parameters (10, 10') in the form of a compressed air flow at the controllable means for producing a permanent and/or releasable pipe connection (6, 6', 7, 7'), which outputs the actual process parameters (10, 10') as electrical actual process parameters (310) to a control unit (105) of a pipe joint applicator with a control device (100), which determines the set process parameters (110) for controlling the process control means (200) from the electrical actual process parameters (310).

2. A system according to claim 1, comprising the pipe joint applicator with the control device (100) for a process control means (200) for controlling the process parameters (210) to be delivered to a pipe connection (1) to be produced for controlling the controllable means for producing a permanent and/or releasable pipe connection (6, 6', 7, 7') of two pipe elements (4, 5), **characterized in that** the pipe joint applicator with a control device (100) comprises a means for detecting the actual value (300), which detects at least one actual value of the process parameters (10, 10') and determines therefrom a set process parameter (110), with which the process control means (200) can be controlled.

3. The system according to claim 2, comprising the pipe joint applicator with the control device (100), wherein at least one actual value of the process parameters (10, 10') is comparable with at least one set process parameter (110).

4. System according to claim 3, comprising the pipe joint applicator with the control device (100), wherein an alarm can be output to a user (2) via an interface for input by the user and/or for output to a user (20) if at least one actual value of the process parameters (10, 10') deviates from at least one tolerance value range of a set process parameter (110).

5. System according to claim 3, comprising the pipe joint applicator with the control unit (100), wherein, if at least one actual value of the process parameters (10, 10') deviates from at least one tolerance value range of a set process parameter (110), an error log can be generated by a control unit (105) of the pipe joint applicator with control unit (100) and can be output to the user (2) or stored in a nearby or remote computer (400).

6. A system according to any one of the preceding claims 2 to 5, comprising the pipe joint applicator with the control device (100), wherein the means for detecting the actual value (300) comprises a sensor for detecting the pressure of a fluid medium for controlling the controllable means for establishing a permanent and/or releasable pipe connection (6, 6', 7, 7').

7. The system according to any one of the preceding claims 2 to 6, comprising the pipe joint applicator with the control device (100), wherein the means for detecting the actual value (300) comprises an acoustic/electrical vibration transducer or mechanical/electrical vibration transducer within a frequency range of 5 Hz to 100k Hz for detecting the structure-borne sound and/or the temporal structure-borne sound characteristic (10, 10') and/or of the spatial sound and/or of the temporal spatial sound curve (10, 10') in the pipe connection area during the control of the controllable means for establishing a permanent and/or releasable pipe connection (6, 6', 7, 7') in the area of the pipe connection (1)

8. System according to one of the preceding claims 2 to 7, comprising the pipe joint applicator with the control device (100), wherein the means for actual value detection (300) comprises a force sensor and/or a torque sensor for detecting the process parameter (10, 10') of a controlling force or the controlling torque or the temporal force or torque progression applied to the means for producing a permanent and/or releasable pipe connection (6, 7, 7') for closing or opening the force-fit and/or form-fit connection of the pipe ends of a first pipe element (4) with a second pipe element (5).

9. The system according to any one of the preceding claims 2 to 8, comprising the pipe joint applicator with the control device (100), wherein the means for detecting the actual value (300) comprises a temperature sensor for detecting the temperature or temperature profile during control of the controllable means for making permanent and/or releasable pipe connection (6, 6', 7, 7') in the area of the pipe joint (1).

10. The system according to any one of the preceding claims 2 to 9, comprising the pipe joint applicator with the control device (100), wherein the means for detecting the actual value (300) comprises a sensor for optical coding, for example an optical barcode scanner and/or a sensor for text recognition, for example a camera or a character reader, and/or an RFID reader for detecting material properties and/or dimensions of the pipe elements (4, 5) and/or the sleeve (3, 3') to be connected.

11. The system according to any one of the preceding claims 2 to 10, comprising the pipe joint applicator with the control device (100), wherein the means for detecting the actual value (300) comprises a GPS sensor for detecting the position of the created pipe joint in three-dimensional space with respect to the reference system earth and/or a timer for detecting a time stamp.

12. The system according to any one of the preceding claims 2 to 11, comprising the pipe joint applicator with the control device (100), wherein the means for detecting the actual value (300) comprises means for detecting the user's personal identification data, for example an RFID reader, magnetic stripe reader, barcode reader and/or an input keyboard.

13. System according to one of the preceding claims 2 to 12, comprising the pipe joint applicator with the control device (100), wherein in the pipe joint area for a contactless detection of the ends of plastic pipes at one or both pipe ends of the first pipe element (4) and the second pipe element (5) of the pipe elements to be connected and/or in the sleeve (3) at least one means for position detection (304, 305) is attached to one or both pipe ends of the first pipe element (4) and the second pipe element (5) of the pipe elements to be connected and/or in the sleeve (3), wherein the means for detecting the actual value (304, 305) changes its position until the correct position is reached or when a correct position of a pipe element (4, 5) is reached and the change in position can be detected inductively, capacitively or magnetically as the actual value of the process parameters (10') via a proximity sensor within the means for detecting the actual value (300).

14. A method of producing a connection between a first pipe element (4) and a second pipe element (5) by means of the system according to claim 1, the method comprising the following steps:
- detecting the information for identifying the pipe elements (4, 5), and optionally the sleeve (3, 3') for example the material composition, the nominal diameter, the manufacturer, the serial number or type of connection to be made,
- determining the set process parameters (110) for controlling the process control means (200),
- applying the process parameters (210) to the controllable means for producing a permanent and/or releasable pipe connection (6, 6', 7., 7') of a first and/or a second pipe element (4, 5) with respect to a sleeve (3, 3'),
- optionally detecting the actual values (10, 10') of the process parameters (210) applied to the controllable means for producing permanent and/or releasable pipe connection (6, 6', 7, 7') of a first and/or a second pipe element with respect to a sleeve (3, 3'),
- optional comparison of the actual values (10, 10') of the process parameters (210) applied to the controllable means for producing permanent and/or releasable pipe connection (6, 6', 7, 7') of a first and/or a second pipe element (4, 5) with respect to a sleeve (3, 3') with a tolerance band for the set process parameters (110),
- optional output of the result to a user via a display device and/or optional documentation of the result in a data storage device or via a printer.

15. The method according to claim 14, additionally comprising the steps of:
- detecting the user's personal identification data,
- detecting and storing the time and/or geographic position at the moment the connection is established.

## Revendications

1. Système pour réaliser un raccord entre un premier élément de tube (4) et un deuxième élément de tube (5), comprenant un manchon (3), le manchon (3) comprenant un manchon d'enfichage ayant un élément de serrage qui présente un élément de coincement pouvant être couplé par poussée dans la direction longitudinale du manchon d'enfichage, l'élément de serrage étant formé et conçu de telle manière qu'en cas d'application d'une force axiale au moyen d'un fluide sous pression, il exerce son effet de serrage sous la forme d'une fonction d'encliquetage sur le premier élément de tube (4) et le deuxième élément de tube (5), comprenant en outre un moyen de commande de processus (200) sous la forme d'une vanne à air comprimé qui peut être commandée par un paramètre de processus de consigne (110) et qui permet d'appliquer un paramètre de processus (210) sous forme de courbe commandée de l'air comprimé aux moyens commandables de réalisation d'un raccord de tubes permanent et/ou amovible (6, 6', 7, 7") du manchon d'enfichage, ce qui permet d'exercer un effet de serrage sous la forme d'une fonction d'encliquetage sur le premier élément de tube (4) et le deuxième élément de tube (5), et comprenant un moyen de détection de valeur réelle (300) de l'un au moins des paramètres de processus réels (10, 10') sous forme de courbe d'air comprimé au niveau des moyens commandables de réalisation d'un raccord de tubes permanent et/ou amovible (6, 6', 7, 7"), qui délivre les paramètres de processus réels (10, 10') en tant que paramètres de processus réels électriques (310) à une unité de commande (105) d'un applicateur de raccordement de tubes muni d'un appareil de contrôle (100), qui détermine à partir des paramètres de processus réels électriques (310) les paramètres de processus de consigne (110) pour commander le moyen de commande de processus (200).

2. Système selon la revendication 1, comprenant l'applicateur de raccordement de tubes muni de l'appareil de contrôle (100) pour un moyen de commande de processus (200) destiné à commander les paramètres de processus (210) à délivrer à un raccord de tubes (1) à réaliser, pour commander les moyens commandables de réalisation d'un raccord de tubes permanent et/ou amovible (6, 6', 7, 7") de deux éléments de tube (4, 5),
**caractérisé en ce que** l'applicateur de raccordement de tubes muni d'un appareil de contrôle (100) comprend un moyen de détection de valeur réelle (300) qui détecte au moins une valeur réelle des paramètres de processus (10, 10') et en détermine un paramètre de processus de consigne (110) permettant de commander le moyen de commande de processus (200).

3. Système selon la revendication 2, comprenant l'applicateur de raccordement de tubes muni de l'appareil de contrôle (100), dans lequel au moins une valeur réelle des paramètres de processus (10, 10') est comparable à au moins un paramètre de processus de consigne (110).

4. Système selon la revendication 3, comprenant l'applicateur de raccordement de tubes muni de l'appareil de contrôle (100), dans lequel, en cas d'écart d'au moins une valeur réelle des paramètres de processus (10, 10') par rapport à au moins une plage de valeurs de tolérance d'un paramètre de processus de consigne (110), une alarme peut être émise à un utilisateur (2) par l'intermédiaire d'une interface pour l'entrée par l'utilisateur et/ou pour la sortie vers un utilisateur (20).

5. Système selon la revendication 3, comprenant l'applicateur de raccordement de tubes muni de l'appareil de contrôle (100), dans lequel, en cas d'écart d'au moins une valeur réelle des paramètres de processus (10, 10') par rapport à au moins une plage de valeurs de tolérance d'un paramètre de processus de consigne (110), un protocole d'erreur peut être établi par une unité de commande (105) de l'applicateur de raccordement de tubes muni de l'appareil de contrôle (100) et être délivré à l'utilisateur (2) ou être enregistré dans un ordinateur (400) proche ou éloigné.

6. Système selon l'une des revendications précédentes 2 à 5, comprenant l'applicateur de raccordement de tubes muni de l'appareil de contrôle (100), le moyen de détection de valeur réelle (300) comprenant un capteur de détection de la pression d'un milieu fluide pour commander les moyens commandables de réalisation d'un raccord de tubes permanent et/ou amovible (6, 6', 7, 7').

7. Système selon l'une des revendications précédentes 2 à 6, comprenant l'applicateur de raccordement de tubes muni de l'appareil de contrôle (100), le moyen de détection de valeur réelle (300) comprenant, au niveau du raccord de tubes (1), un transducteur de vibration acoustique/électrique ou un transducteur de vibration mécanique/électrique dans une plage de fréquences de 5 Hz à 100k Hz pour détecter un bruit de structure et/ou l'évolution temporelle du bruit de structure (10, 10') et/ou le son spatial et/ou l'évolution temporelle du son spatial (10, 10') dans la zone du raccord de tubes pendant la commande des moyens commandables de réalisation d'un raccord de tubes permanent et/ou amovible (6, 6', 7, 7").

8. Système selon l'une des revendications précédentes 2 à 7, comprenant l'applicateur de raccordement de tubes muni de l'appareil de contrôle (100), le moyen de détection de valeur réelle (300) comprenant un capteur de force et/ou un capteur de couple pour détecter les paramètres de processus (10, 10') d'une force de commande ou du couple de commande ou de l'évolution temporelle de la force ou du couple, appliqué(e) aux moyens de réalisation d'un raccord de tubes permanent et/ou amovible (6, 6', 7, 7') pour fermer ou ouvrir la liaison par coopération de force et/ou de forme des extrémités de tube d'un premier élément de tube (4) et d'un deuxième élément de tube (5).

9. Système selon l'une des revendications précédentes 2 à 8, comprenant l'applicateur de raccordement de tubes muni de l'appareil de contrôle (100), le moyen de détection de valeur réelle (300) comprenant, au niveau du raccord de tubes (1), un capteur de température pour détecter la température ou la courbe de température pendant la commande des moyens commandables de réalisation d'un raccord de tubes permanent et/ou amovible (6, 6', 7, 7').

10. Système selon l'une des revendications précédentes 2 à 9, comprenant l'applicateur de raccordement de tubes muni de l'appareil de contrôle (100), le moyen de détection de valeur réelle (300) comprenant un capteur de codages optiques, par exemple un lecteur optique de code à barres et/ou un capteur de reconnaissance de texte, par exemple une caméra ou un lecteur de caractères, et/ou un lecteur RFID pour détecter les propriétés du matériau et/ou les dimensions des éléments de tube (4, 5) à raccorder et/ou du manchon (3, 3').

11. Système selon l'une des revendications précédentes 2 à 10, comprenant l'applicateur de raccordement de tubes muni de l'appareil de contrôle (100), le moyen de détection de valeur réelle (300) comprenant un capteur GPS pour détecter la position du raccord de tubes réalisé dans l'espace tridimensionnel par rapport au référentiel terrestre et/ou une horloge pour détecter un horodatage.

12. Système selon l'une des revendications précédentes 2 à 11, comprenant l'applicateur de raccordement de tubes muni de l'appareil de contrôle (100), le moyen de détection de valeur réelle (300) comprenant un moyen pour détecter les données d'identification personnelles de l'utilisateur, par exemple un lecteur RFID, un lecteur de bande magnétique, un lecteur de code à barres et/ou un clavier de saisie.

13. Système selon l'une des revendications précédentes 2 à 12, comprenant l'applicateur de raccordement de tubes muni de l'appareil de contrôle (100), dans lequel, dans la zone du raccord de tubes, pour une détection sans contact physique des extrémités de tubes en matière plastique, à l'une ou aux deux extrémités de tube du premier élément de tube (4) et du deuxième élément de tube (5) des éléments de tube à raccorder et/ou dans le manchon (3), il est prévu au moins un moyen de détection de position (304, 305), le moyen de détection de position (304, 305) modifiant sa position jusqu'à atteindre la position correcte ou jusqu'à ce qu'une position correcte d'un élément de tube (4, 5) soit atteinte, et la modification de position peut être détectée en tant que valeur réelle des paramètres de processus (10') de manière inductive, capacitive ou magnétique par un capteur de proximité à l'intérieur des moyens de détection de valeur réelle (300).

14. Procédé de réalisation d'un raccord entre un premier élément de tube (4) et un deuxième élément de tube (5) au moyen du système selon la revendication 1, le procédé comprenant les étapes suivantes consistant à :
- saisir les informations d'identification des éléments de tube (4, 5), et éventuellement du manchon (3, 3'), par exemple de la composition du matériau, du diamètre nominal, du fabricant, du numéro de série ou du type de raccord à réaliser,
- déterminer les paramètres de processus de consigne (110) pour commander le moyen de commande de processus (200),
- appliquer les paramètres de processus (210) aux moyens commandables de réalisation d'un raccord de tubes permanent et/ou amovible (6, 6', 7, 7") d'un premier et/ou d'un deuxième élément de tube (4, 5) par rapport à un manchon (3, 3'),
- optionnellement, détecter les valeurs réelles (10, 10') des paramètres de processus (210) appliqués aux moyens commandables de réalisation d'un raccord de tubes permanent et/ou amovible (6, 6', 7, 7') d'un premier et/ou d'un deuxième élément de tube par rapport à un manchon (3, 3'),
- optionnellement, comparer les valeurs réelles (10, 10') des paramètres de processus (210) appliqués aux moyens commandables de réalisation d'un raccord de tubes permanent et/ou amovible (6, 6', 7, 7") d'un premier et/ou d'un deuxième élément de tube (4, 5) par rapport à un manchon (3, 3'), avec une bande de tolérance pour les paramètres de processus de consigne (110),
- optionnellement, délivrer le résultat à un utilisateur via un dispositif d'affichage et/ou optionnellement, documenter le résultat dans un dispositif de stockage de données ou via une imprimante.

15. Procédé selon la revendication 14, comprenant en outre les étapes consistant :
- saisir les données d'identification personnelles de l'utilisateur,
- saisir et enregistrer l'heure et/ou la position géographique au moment de la réalisation du raccord.
